# EUROPEAN PATENT APPLICATION

(11) **EP 4 542 953 A1**
(43) Date of publication of application: **23.04.2025**
(21) Application number: 23838823.5
(22) Date of filing: 05.07.2023
(51) Int. Cl.: H04L 41/16

(54) **METHOD AND APPARATUS FOR DETERMINING ARTIFICIAL INTELLIGENCE (AI) MODEL**

(30) Priority: 13.07.2022 CN 202210823771; 12.08.2022 CN 202210970366
(71) Applicant: Huawei Technologies Co., Ltd., Shenzhen, Guangdong 518129 (CN)
(72) Inventor: QIN, Cheng, Shenzhen, Guangdong 518129 (CN); LI, Yuan, Shenzhen, Guangdong 518129 (CN); WANG, Sihai, Shenzhen, Guangdong 518129 (CN); YANG, Rui, Shenzhen, Guangdong 518129 (CN)
(74) Representative: Gill Jennings & Every LLP
(86) International application number: PCT/CN2023/105923
(87) International publication number: WO 2024/012331

(57) **Abstract**

This application provides a method and an apparatus for determining an artificial intelligence AI model. To construct, for a scenario, a scenario identifier corresponding to the scenario, in this application, an AI model corresponding to the scenario identifier can be quickly and accurately obtained. The method includes: A terminal device obtains a first identifier, where the first identifier indicates a first scenario. The terminal device obtains a first AI model, where the first AI model corresponds to the first scenario.

## Description

This application claims priorities to Chinese Patent Application No. 202210823771.5, filed with the China National Intellectual Property Administration on July 13, 2022 and entitled "METHOD FOR INDICATING USAGE SCENARIO OF AI MODEL, TERMINAL DEVICE, AND NETWORK DEVICE", and to Chinese Patent Application No. 202210970366.6, filed with the China National Intellectual Property Administration on August 12, 2022 and entitled "METHOD AND APPARATUS FOR DETERMINING ARTIFICIAL INTELLIGENCE AI MODEL", which are incorporated herein by reference in their entireties.

### TECHNICAL FIELD

This application relates to the communication field, and in particular, to a method and an apparatus for determining an artificial intelligence AI model.

### BACKGROUND

In a scenario in which an artificial intelligence (artificial intelligence, AI) technology is introduced to a wireless communication system, whether an AI model is applicable to different scenarios is an important indicator for measuring performance of the model. To adapt the AI model to various scenarios, a large amount of data in different scenarios needs to be obtained for AI model training. In this way, the obtained AI model is also complex. In addition, scenarios are considered as many as possible for the trained AI model. Therefore, for each scenario, performance of the AI model may not achieve a good effect.

However, training different AI models for different scenarios results in high maintenance costs of the AI models. In a related technology, the scenarios are distinguished from a perspective of datasets. A corresponding dataset needs to be known in advance before a corresponding model can be selected. However, in practice, dataset information used during the training cannot be obtained.

### SUMMARY

This application provides a method and an apparatus for determining an artificial intelligence AI model, to construct, for a scenario, a scenario identifier corresponding to the scenario, to obtain an AI model corresponding to the scenario identifier. To achieve the foregoing technical objective, the following technical solutions may be applied in this application.

According to a first aspect, a method for determining an artificial intelligence AI model is provided. The method includes: A terminal device obtains a first identifier, where the first identifier indicates a first scenario. The terminal device obtains a first AI model, where the first AI model corresponds to the first scenario. Based on the method provided in the first aspect, the first identifier corresponds to the first scenario, and the first scenario corresponds to the first AI model. Further, the terminal device may accurately and quickly obtain the first AI model corresponding to the first identifier.

In an implementation, that a terminal device obtains a first identifier includes: The terminal device receives the first identifier from a network device. Alternatively, the terminal device determines the first identifier based on the first scenario.

For example, the terminal device may receive the first identifier from the network device. Alternatively, the terminal device may determine the first identifier based on scenario information (the first scenario) of the terminal device.

In an implementation, that the terminal device receives the first identifier from a network device includes: The terminal device receives a first preset message from the network device, where the first preset message carries the first identifier.

In an implementation, the first preset message includes a system information block SIB and/or dedicated signaling between the network device and the terminal device.

In an implementation, that the terminal device obtains a first AI model includes: The terminal device obtains the first AI model based on the first identifier and training data. Alternatively, the terminal device receives the first AI model from a network device. Alternatively, the terminal device obtains the first AI model from locally stored AI models.

In an implementation, the terminal device obtains the first AI model, where the training data is a training dataset.

In an implementation, that the terminal device receives the first identifier from a network device further includes: The terminal device receives an adjacent cell measurement configuration message from the network device, where the adjacent cell measurement configuration message carries the first identifier.

In an implementation, that the terminal device receives the first identifier from a network device further includes: The terminal device receives a switching command from the network device, where the switching command carries the first identifier, or the switching command indicates whether scenario information of a first network device is the same as scenario information of a second network device after switching.

In an implementation, that the terminal device receives the first AI model from a network device further includes: The terminal device receives the first AI model from a server, where the server may communicate with the terminal device.

In an implementation, that the terminal device obtains the first AI model based on the first identifier and training data includes: The terminal device determines the training data of the first AI model based on the first identifier, where the training data corresponds to the first scenario. The terminal device obtains the first AI model through training based on the training data.

In an implementation, that the terminal device obtains the first AI model based on the first identifier and training data further includes: The server and/or the network device obtain/obtains the first AI model through training based on the first identifier and the training data.

In an implementation, after that the terminal device obtains the first AI model based on the first identifier and training data, the method further includes: The terminal device generates a correspondence between the first identifier and the first AI model. In this way, the terminal device may obtain the corresponding AI model based on the first identifier.

In an implementation, a same first identifier corresponds to a same first AI model.

In an implementation, there are a plurality of first identifiers. Different first identifiers correspond to a same network configuration parameter, and the network configuration parameter includes at least an antenna port configuration parameter or a beam configuration parameter.

In an implementation, there are the plurality of first identifiers, and the terminal device receives the plurality of first identifiers from the network device; and the terminal device determines one first identifier based on the plurality of first identifiers and the network configuration parameter.

In an implementation, a first message includes media access control control element MAC CE signaling.

In an implementation, the first identifier includes at least one of a scenario type identifier, a first PMI identifier, and a scenario mark identifier. A granularity of the scenario type identifier is greater than that of the first PMI identifier.

In an implementation, the first identifier indicates a first network information set, and the first network information set includes at least one of a cell identifier, a public land mobile network PLMN identifier, a tracking area code TAC, a radio access network identifier RAN ID, a cell frequency, and a cell band that are of the first cell. The first cell is an adjacent cell of a second cell, and the second cell is a cell in which the terminal device is located.

In an implementation, when the terminal device does not receive the first identifier, the method further includes: The terminal device sends a first message to the network device, where the first message indicates the network device to send the first identifier.

In an implementation, when the terminal device receives the first identifier, and the terminal device does not obtain the first AI model corresponding to the first identifier, the method further includes: The terminal device sends the first message to the network device, where the first message indicates the network device to send a second identifier, where the second identifier is different from the first identifier.

In an implementation, when the terminal device receives the first identifier, and the terminal device obtains the first AI model corresponding to the first identifier, the method further includes: The terminal device sends the first message to the network device, where the first message indicates the network device to send a second identifier, where the second identifier is different from the first identifier.

In an implementation, the first message carries at least one of one or more first identifiers supported by the terminal device, scenario information of the first scenario of the terminal device, and request information for the terminal device to request the network device to send the first identifier.

For example, the first identifier corresponds to a current scenario (the first scenario) of the terminal device, and based on different distinguishing granularities of the scenario identifiers, the current scenario identifier may be described as a plurality of scenario identifiers, and the first identifier is a general term of these scenario identifiers.

In an implementation, the method further includes: The terminal device receives configuration information of a first random access resource and/or configuration information of a second random access resource from the network device. When the terminal device obtains the first AI model corresponding to the first identifier, the terminal device initiates random access based on the configuration information of the first random access resource by using the first random access resource. When the terminal device does not obtain the first AI model corresponding to the first identifier, the terminal device initiates random access based on the configuration information of the second random access resource by using the second random access resource. In this way, the terminal device may quickly notify the network device whether the terminal device supports the first identifier sent by the network device.

According to a second aspect, a method for determining an artificial intelligence AI model is provided. The method includes: A network device determines a first identifier. The network device sends the first identifier to a terminal device, where the first identifier indicates a first scenario. Based on the method provided in the second aspect, the network device determines the first identifier corresponding to the first scenario, and the network device sends the first identifier to the terminal device, to indicate the first identifier corresponding to a current scenario (the first scenario) of the terminal device. Further, the terminal device may obtain the first AI model corresponding to the first identifier.

In an implementation, the method further includes: The network device receives a first message from the terminal device. The network device sends the first identifier to the terminal device based on the first message.

In an implementation, the method further includes: The network device receives a first message from the terminal device. The network device sends a second identifier to the terminal device based on the first message.

In an implementation, the method further includes: The first network device sends, to a second network device, one or more first identifiers supported by the terminal device, where the first network device is a network device accessed by the terminal device before switching, and the second network device is a network device accessed by the terminal device after the switching.

According to a third aspect, a communication apparatus is provided. The communication apparatus includes a processor. The processor is coupled to a memory, and the memory is configured to store a computer program. The processor is configured to execute the computer program stored in the memory, to perform the method according to any implementation of the first aspect and the second aspect.

According to a fourth aspect, a chip system is provided. The chip system includes a logic circuit and an input/output port. The logic circuit is configured to implement a processing function in the first aspect and the second aspect, and the input/output port is configured to implement receiving and sending functions in the first aspect to the fourth aspect. Specifically, the input port may be configured to implement the receiving function in the first aspect to the fourth aspect, and the output port may be configured to implement the sending function in the first aspect and the fourth aspect.

In a design, the chip system further includes a memory, and the memory is configured to store program instructions and data for implementing functions in the first aspect and the second aspect.

The chip system may include a chip, or may include the chip and another discrete device.

According to a fifth aspect, a computer-readable storage medium is provided. The computer-readable storage medium stores a computer program or instructions. When the computer program or the instructions are run on a computer, the method according to any implementation of the first aspect and the second aspect is performed.

According to a sixth aspect, a computer program product is provided, including a computer program or instructions. When the computer program or the instructions are run on a computer, the method according to any implementation of the first aspect and the second aspect is performed.

### BRIEF DESCRIPTION OF DRAWINGS

FIG. 1 is a diagram of an architecture of a communication system according to an embodiment of this application;
FIG. 2 is a diagram of a correspondence between a scenario and an AI model according to an embodiment of this application;
FIG. 3 is a diagram of a correspondence between AI models in a scenario according to an embodiment of this application;
FIG. 4 is a diagram of a correspondence between AI models in another scenario according to an embodiment of this application;
FIG. 5 is another diagram of a correspondence between a scenario and an AI model according to an embodiment of this application;
FIG. 6A is another diagram of a correspondence between a scenario and an AI model according to an embodiment of this application;
FIG. 6B is a diagram of a relationship between scenarios according to an embodiment of this application;
FIG. 7 is another diagram of a correspondence between a scenario and an AI model according to an embodiment of this application;
FIG. 8 is another diagram of a correspondence between a scenario and an AI model according to an embodiment of this application;
FIG. 9 is another diagram of a correspondence between a scenario and an AI model according to an embodiment of this application;
FIG. 10A is a schematic flowchart of a method for determining an AI model according to an embodiment of this application;
FIG. 10B is a schematic flowchart of another method for determining an AI model according to an embodiment of this application;
FIG. 11 is a schematic flowchart of another method for determining an AI model according to an embodiment of this application;
FIG. 12 is a diagram of another relationship between scenarios according to an embodiment of this application;
FIG. 13 is a schematic flowchart of another method for determining an AI model according to an embodiment of this application;
FIG. 14 is a schematic flowchart of another method for determining an AI model according to an embodiment of this application;
FIG. 15 is a schematic flowchart of a method for determining an AI model according to an embodiment of this application; and
FIG. 16 is a diagram of a structure of a communication apparatus according to an embodiment of this application.

### DESCRIPTION OF EMBODIMENTS

The following describes technical solutions of this application with reference to the accompanying drawings. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle-to-everything (vehicle-to-everything, V2X) communication system, a device-to-device (device-to-device, D2D) communication system, an internet of vehicles communication system, a 4th generation (4th generation, 4G) mobile communication system like a long term evolution (long term evolution, LTE) system or a worldwide interoperability for microwave access (worldwide interoperability for microwave access, WiMAX) communication system, a 5th generation (5th generation, 5G) mobile communication system like a new radio (new radio, NR) system, and a future communication system like a 6th generation (6th generation, 6G) mobile communication system.

All aspects, embodiments, or features are presented in this application by describing a system that may include a plurality of devices, assemblies, modules, and the like. It should be appreciated and understood that, each system may include another device, assembly, module, and the like, and/or may not include all devices, assemblies, modules, and the like discussed with reference to the accompanying drawings. In addition, a combination of these solutions may be further used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the term "example" is used to present a concept in a specific manner.

In embodiments of this application, sometimes "of (of)", "corresponding (corresponding, relevant)", and "corresponding (corresponding)" may be mixed. It should be noted that when differences are not emphasized, meanings expressed by the terms are the same.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

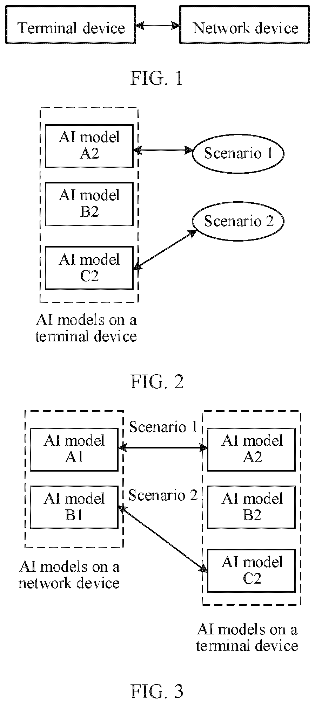

For ease of understanding embodiments of this application, a communication system shown in FIG. 1 is first used as an example to describe in detail a communication system applicable to an embodiment of this application. As shown in FIG. 1, the communication system includes a terminal device and a network device. The terminal device is a terminal that accesses the communication system and has wireless receiving and sending functions, or a chip or a chip system that may be disposed in the terminal. The terminal device may also be referred to as user equipment (User Equipment, UE), a user apparatus, an access terminal, a subscriber unit, a subscriber station, a mobile station (mobile station, MS), a remote station, a remote terminal, a mobile device, a user terminal, a terminal, a terminal unit, a terminal station, a terminal apparatus, a wireless communication device, a user agent, or a user apparatus. For example, the terminal device in embodiments of this application may be a mobile phone (mobile phone), a wireless data card, a personal digital assistant (personal digital assistant, PDA) computer, a laptop computer (laptop computer), a tablet computer (tablet, for example, Pad), an unmanned aerial vehicle, a computer with wireless receiving and sending functions, a machine type communication (machine type communication, MTC) terminal, a virtual reality (virtual reality, VR) terminal device, an augmented reality (augmented reality, AR) terminal device, an internet of things (internet of things, IoT) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal (for example, a game machine, a smart television, a smart speaker, a smart refrigerator, or fitness equipment) in a smart home (smart home), an in-vehicle terminal, or an RSU having a terminal function. The access terminal may be a cellular phone (cellular phone), a cordless phone, a session initiation protocol (session initiation protocol, SIP) phone, a wireless local loop (wireless local loop, WLL) station, a personal digital assistant (personal digital assistant, PDA), a handheld device (handset) with a wireless communication function, a computing device or another processing device connected to a wireless modem, a wearable device, or the like.

For another example, the terminal device in embodiments of this application may be an express delivery terminal (for example, a device that can monitor a location of a cargo vehicle, or a device that can monitor a temperature and humidity of a cargo) in intelligent logistics, a wireless terminal (for example, a wearable device that can collect related data of poultry and livestock) in intelligent agriculture, a wireless terminal (for example, a smart elevator, a fire monitoring device, or a smart meter) in intelligent architecture, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a self-service checkout machine, or an unmanned convenience store) in intelligent retail. For another example, the terminal device in this application may be an in-vehicle module, an in-vehicle assembly, an in-vehicle component, an in-vehicle chip, or an in-vehicle unit that is disposed inside a vehicle as one or more components or units. The vehicle may implement the methods provided in this application by using the in-vehicle module, the in-vehicle assembly, the in-vehicle component, the in-vehicle chip, or the in-vehicle unit that is disposed inside the vehicle.

The network device may be one of an access network device and a core network element; or the network device may be a device integrating one or more devices in a core network element and an access network device. The access network device is a device that is located on a network side of the communication system and that has wireless receiving and sending functions, or a chip or a chip system that may be disposed in the device. The access network device includes but is not limited to an access point (access point, AP) in a wireless fidelity (wireless fidelity, Wi-Fi) system, for example, a home gateway, a router, a server, a switch, or a bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission reception point, TRP, or transmission point, TP), or the like. The access network device may alternatively be a gNB or a transmission point (TRP or TP) in the 5G system like a new radio (new radio, NR) system, or one antenna panel or a group of antenna panels (including a plurality of antenna panels) of a base station in the 5G system. The access network device may alternatively be a network node constituting a gNB or a transmission point, for example, a baseband unit (BBU), a distributed unit (distributed unit, DU), or a road side unit (road side unit, RSU) having a base station function. The access network device may alternatively be a satellite, or base stations in various forms in the future.

The core network element may include but is not limited to one or more of the following: a user plane network element, an authentication server, a mobility management network element, a session management network element, a unified data management network element, a policy control network element, a storage function network element, an application network element, and a network exposure network element.

The user plane network element, as an interface with a data network, completes functions such as user plane data forwarding, session/flow-level-based charging statistics collection, and bandwidth limitation, to be specific, packet routing and forwarding, quality of service (quality of service, QoS) handling for user plane data, and the like. In the 5G communication system, the user plane network element may be a user plane function (user plane function, UPF) network element.

The authentication server performs security authentication for users. In a 5G communication system, the authentication server may be an authentication server function (authentication server function, AUSF) network element.

The mobility management network element is mainly configured to perform mobility management, access management, and the like. In the 5G communication system, the access management network element may be an access and mobility management function (access and mobility management function, AMF) network element, and mainly performs functions such as mobility management and access authentication/authorization. In addition, the mobility management network element is further responsible for transferring a user policy between the terminal and a policy control function (policy control function, PCF) network element.

The session management network element is mainly used for session management (for example, creation or deletion), maintenance of a session context and user plane forwarding tunnel information, internet protocol (internet protocol, IP) address allocation and management for the user equipment, selection of a termination that can manage a user plane function interface and a policy control and charging function interface, a downlink data notification, and the like. In the 5G communication system, the session management network element may be a session management function (session management function, SMF) network element, and completes terminal IP address allocation, UPF selection, charging, QoS policy control, and the like.

The unified data management network element is responsible for management of a user identifier, subscription data, and authentication data, and serving network element registration management of the user. In the 5G communication system, the data management network element may be a unified data management (unified data management, UDM) network element.

The policy control network element includes a user subscription data management function, a policy control function, a charging policy control function, quality of service (quality of service, QoS) control, and the like, is a unified policy framework used to guide network behavior, and provides policy rule information and the like for a control plane function network element (for example, an AMF or an SMF network element). In the 5G communication system, the policy control network element may be a PCF.

The storage function network element provides a storage function and a selection function of network functional entity information for another core network element. In the 5G communication system, the network element may be a network function repository function (network function repository function, NRF) network element.

The application network element may be configured to provide various services, can interact with a core network through a network exposure function (network element function, NEF) network element, and can interact with a policy management framework to perform policy management. In the 5G communication system, the application network element may be an application function (application function, AF) network element, represents an application function of a third party or an operator, is an interface for obtaining external application data in a 5G network, and is mainly configured to transfer a requirement of an application side on the network side.

The network exposure network element may be configured to: provide a framework, authentication, and an interface that are related to network capability exposure, and transfer information between a 5G system network function and another network function. In the 5G communication system, the network exposure network element may be a network exposure function (network exposure function, NEF) network element, is mainly configured to expose a service and a capability of a 3GPP network function to the AF, and may further enable the AF to provide information for the 3GPP network function.

Optionally, the communication system shown in FIG. 1 is applicable to the communication network currently being discussed, or is applicable to a future network or the like. This is not specifically limited in embodiments of this application. A method for determining an AI model provided in embodiments of this application is applicable between the terminal device and the network device shown in FIG. 1. The method for determining an AI model provided in embodiments of this application is further applicable to the terminal device or the network device shown in FIG. 1. For specific implementation of the method provided in the embodiment of this application, refer to the following method embodiment. Details are not described herein again.

It should be noted that, the solutions in embodiments of this application are further applicable to another communication system, and a corresponding name may also be replaced with a name of a corresponding function in the another communication system. It should be understood that, FIG. 1 is merely a simplified diagram used as an example for ease of understanding. The communication system may further include other network devices and/or other terminal devices that are not shown in FIG. 1.

An AI model has a powerful learning capability. Therefore, the AI model is applicable to more and more scenarios, for example, the channel state information (channel state information, CSI) feedback scenario, the beam management scenario, and the positioning scenario.

Optionally, a general AI model may be designed for a plurality of scenarios, and the general AI model is applicable to the plurality of scenarios. Training of the AI model depends on training data. Therefore, to improve generalization of the AI model, a large amount of training data in different scenarios needs to be obtained for the training. In addition, to adapt to various scenarios, the general AI model is usually complex in design. In addition, because as many scenarios as possible are considered for feature extraction of the AI model, the AI model may not achieve a good effect in performance in each scenario.

Optionally, different AI models may be designed for different scenarios, so that a difficulty in collection of the training data and the design of the AI models is reduced. In addition, the AI model is trained only for a specified scenario. Therefore, the AI model is better applicable to the current scenario in feature extraction, so that performance of the AI model for the specified scenario can be better.

For example, when an AI model is applicable to a CSI feedback scenario, an autoencoder architecture may be used for CSI feedback. The autoencoder architecture usually includes an AI encoder and an AI decoder. The AI encoder may be deployed on the terminal device, and the AI decoder may be deployed on the network device. Compared with a conventional CSI feedback technology, CSI feedback based on the AI model can reduce feedback overheads of an air interface and calculation complexity of the terminal device under same CSI feedback performance, and has a larger application prospect.

For example, when an AI model is applicable to a beam management scenario, the terminal device or the network device can efficiently and accurately identify a best beam by using the AI model. The AI model may be located only in the terminal device, or may be located only in the network device. For example, when the AI model is located in the terminal device, the terminal device may train or use the AI model based on training data sent by the network device or training data sensed by the terminal device.

For example, when an AI model is applicable to a positioning scenario, positioning may be performed in a three-point positioning manner. The terminal device obtains location information of three surrounding network devices, and inputs the location information into the corresponding AI model. Further, a location of the terminal device is obtained based on information such as distances, directions, and channels from the terminal device to the three network devices.

For a specified scenario, a dataset in the scenario is obtained, and an AI model in the scenario is obtained through training. The scenario-based AI model has better performance. That is, different scenario-based AI models may be determined based on different datasets. The different datasets may be considered as different scenarios. However, the scenarios are distinguished from a perspective of the datasets, so that a corresponding AI model can be selected only after a corresponding dataset is known in advance. However, in practice, training dataset information used during the training cannot be obtained.

In addition, when different AI models are trained, the collected training data also needs to be classified in advance. If a training dataset into which the training data should be classified is unknown in advance, a corresponding AI model cannot be generated through training, or the obtained training dataset through classification cannot achieve optimal matching performance with a current scenario. This reduces efficiency and performance of using the AI model.

In addition, the terminal device may determine, based on a distribution feature of the training dataset sent by the network device, whether the to-be-used AI model adapts to the current scenario. However, the training dataset has various distribution features and a large amount of data. It is difficult for the terminal device to determine whether the AI model adapts to the current scenario, which may not be accurate.

For the foregoing problem, an embodiment of this application provides a method for determining an AI model, to construct, for a scenario, a scenario identifier corresponding to the scenario, to obtain an AI model corresponding to the scenario identifier.

For different application scenarios, deployment and application modes of AI models are different. For example, when the AI model is applicable to the CSI feedback scenario, the AI encoder is deployed on the terminal device, and the AI decoder is deployed on the network device. AI models on the terminal device and the network device form an entire AI model. The AI models on the terminal device and the network device use a same training dataset, and may match each other for training or use. However, when the AI model is applicable to the beam management scenario or the positioning scenario, the AI model may be located only in the terminal device, or may be located only in the network device. The terminal device trains or uses the AI model based on the data sent by the network device or the data sensed by the terminal device.

In this embodiment of this application, if the AI models are deployed in both the network device and the terminal device, the device on either side of the devices cannot complete use of the entire AI network by using the AI model on the device, and the AI models deployed on the network device and the terminal device need to cooperate with each other, for example, an inference result between the AI models is transferred through the air interface, the AI models are defined as a dual-ended model. If the AI model is only on one side, that is, the network device or the terminal device can directly obtain an inference result based on the AI model deployed on the network device or the terminal device, and does not need to cooperatively complete inference by using an AI model on the other side, the AI model may be defined as a single-ended model.

In the dual-ended model, because two parts of the AI model are used, the AI model needs to be loaded to the network device and the terminal device. In one manner, the network device or the terminal device loads the AI model offline. In this case, the AI model does not need to be transmitted through the air interface. In another manner, the network device or the terminal device loads the AI model online. In this case, the AI model needs to be transmitted through the air interface for loading.

For the single-ended model, although scenario determining may be implemented by the device deployed with the AI model, if there is more specific scenario information, it is more helpful to select and train a scenario model, and determine a training dataset of the scenario model. As shown in FIG. 2, in a terminal device, an AI model A2 determines that a current scenario to be adapted is a scenario 1; and an AI model C2 determines that a current scenario to be adapted is a scenario 2. Optionally, both the scenario 1 and the scenario 2 are preset scenarios.

Optionally, training data in a scenario corresponding to an AI model may be collected to train the AI model. As shown in FIG. 2, training data in the scenario 1 may be collected to train the AI model A2, so that performance of the AI model A2 in the scenario 1 is better. Training data in the scenario 2 is collected to train the AI model C2, so that performance of the AI model C2 in the scenario 2 is better.

For a dual-ended model, consistency of scenario selection between the network device and the terminal device needs to be implemented. Otherwise, when no model is for transferring, selection of the AI models on two ends may not match each other, or training datasets of the AI models at the two ends may not match each other. This affects performance of the AI model. As shown in FIG. 3, a scenario corresponding to an AI model A1 in a network device and a scenario corresponding to an AI model A2 in a terminal device are both a scenario 1. A scenario corresponding to an AI model B1 in the network device and a scenario corresponding to an AI model C2 in the terminal device are both a scenario 2. Optionally, the scenario 1 and the scenario 2 may be preset scenarios.

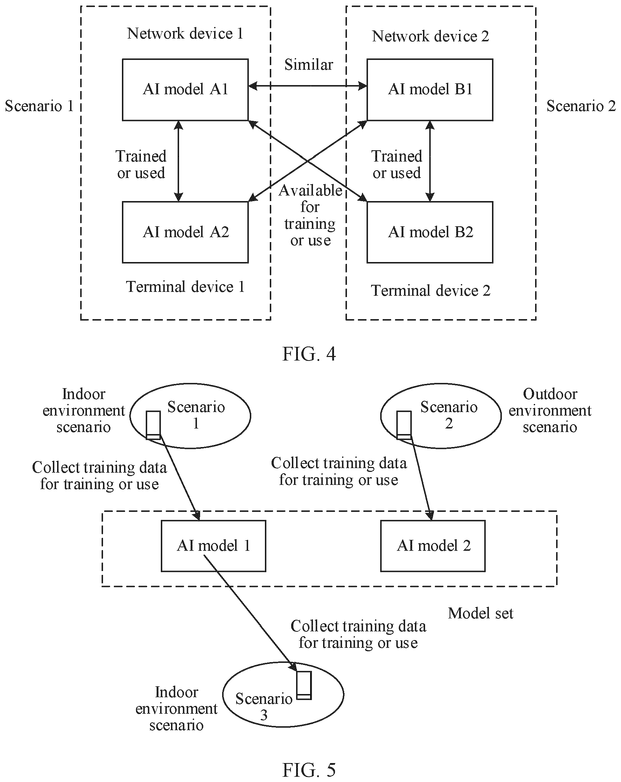

Optionally, for a dual-ended model, as shown in FIG. 4, a network device 1 and a terminal device 1 obtain a pair of AI models A through training in a scenario 1. The AI models A include two parts: an AI model A1 and an AI model A2. The AI model A1 is deployed in the network device 1, and the AI model A2 is deployed in the terminal device 1. The AI models on the network device 1 and the terminal device 1 match each other. A network device 2 and a terminal device 2 obtain a pair of AI models B through training in a scenario 2. The AI models B include two parts: an AI model B1 and an AI model B2. The AI model B1 is deployed in the network device 2, and the AI model B2 is deployed in the terminal device 2. The AI models on the network device 2 and the terminal device 2 match each other. If there is a similarity relationship between the scenario 2 and the scenario 1, the AI models on the network devices may match the AI models on the terminal devices. Training data in the scenario 1 and the scenario 2 may be used to train all the AI models in the scenario 1 and the scenario 2.

For example, after the terminal device 1 switches from the scenario 1 to the scenario 2, if there is the similarity relationship between the scenario 2 and the scenario 1, the terminal device 1 may use the AI model A2 in the scenario 2, and the AI model A2 on the terminal device 1 may match the AI model B1 on the network device 2 in the scenario 2. Similarly, the terminal device 2 may also use the AI model B2 in the scenario 1, and the AI model B2 on the terminal device 2 may match the AI model A1 on the network device 1 in the scenario 1.

For example, when being located in the scenario 1, the terminal device 1 may collect training data 1 in the scenario 1. After switching from the scenario 1 to the scenario 2, the terminal device 1 may collect training data 2 in the scenario 2. If there is the similarity relationship between the scenario 2 and the scenario 1, the training data 1 and the training data 2 may form a training dataset, and the training dataset may be used to train the AI model on the terminal device in the scenario 1 or the scenario 2.

Optionally, for a single-ended model, an example in which the AI model is deployed in the terminal device is used. Optionally, the terminal device may determine a scenario in which the terminal device is located, or the network device may indicate a current scenario, and the terminal device selects a corresponding AI model for use based on the current scenario. Alternatively, the terminal device classifies collected training data into a training dataset used to train the AI model in the current scenario. Optionally, the network device indicates a current scenario to the terminal device by using a scenario identifier, and the terminal device selects a corresponding AI model based on the scenario identifier.

In addition, due to mobility of the terminal device, the scenario in which the terminal device is located may constantly change. Therefore, after the scenario changes, a new scenario in which the terminal device is located needs to be determined, an AI model corresponding to the new scenario needs to be switched to, and training data is collected from the new scenario to form a training dataset, to train the AI model corresponding to the new scenario.

Optionally, a plurality of possible implementations of the scenario identifier are provided in this embodiment of this application. In an implementation, the scenario identifier may be a scenario type identifier, and indicates a type of a scenario with an obvious feature, for example, a channel type of a channel in the scenario, or a type of an environment in which the scenario is located.

For example, the scenario type may be an urban macrocell (urban macrocell, Uma) scenario type, an urban microcell (urban microcell, Umi) scenario type, an indoor (indoor) scenario type, an outdoor (outdoor) scenario type, or the like. This is not limited in this embodiment of this application.

Optionally, the indoor scenario type includes an indoor factory scenario type, an indoor office scenario type, an indoor playground scenario type, and the like. This is not limited in this embodiment of this application.

Optionally, the outdoor scenario type includes an outdoor factory scenario type, an outdoor office scenario type, an outdoor playground scenario type, and the like. This is not limited in this embodiment of this application.

Optionally, a specific scenario may have a plurality of scenario type identifiers. For example, a specific scenario may be described as both an urban macrocell scenario type and an outdoor scenario type, and therefore may have identifiers of the two scenario types.

Optionally, channel features in different scenario types may differ greatly. For example, channel features of a channel in the outdoor scenario type and a channel in the indoor scenario type differ greatly. Therefore, the network device and/or the terminal device may collect data in different scenario types, and separately train scenario-based AI models for different scenario types. In this case, the AI model in a specified scenario has good performance.

Optionally, each scenario type corresponds to a respective AI model. For example, when being located in the urban macrocell scenario type, the terminal device uses an AI model corresponding to the urban macrocell scenario type.

Optionally, each scenario type corresponds to a respective training dataset of an AI model. For example, when being located in the urban macrocell scenario type, the terminal device may collect training data in the urban macrocell scenario type. The training data may be used as a training dataset of an AI model corresponding to the urban macrocell scenario type, or a part of the training dataset.

Optionally, for a scenario type with a smaller range, an AI model corresponding to a scenario type with a larger range may be used.

For example, an AI model A corresponds to the indoor scenario type, and an AI model B corresponds to the indoor office scenario type. In this case, if being located in the indoor office scenario type, the terminal device may use the AI model B, or may use the AI model A.

Optionally, when there is a similarity relationship between the scenario type of the network device 1 and the scenario type of the network device 2, the AI model trained or used in the network device 1 may be trained or used in the network device 2. Similarly, when there is a similarity relationship between the scenario type of the terminal device 1 and the scenario type of the terminal device 2, the AI model trained or used in the terminal device 1 may be trained or used in the terminal device 2.

Optionally, when there is the similarity relationship between the scenario type of the network device 1 and the scenario type of the network device 2, training data collected in the scenario of the network device 1 may be used to train the AI model on the network device 2. Similarly, when there is the similarity relationship between the scenario type of the terminal device 1 and the scenario type of the terminal device 2, training data collected in the scenario of the terminal device 1 may be used to train the AI model on the terminal device 2.

As shown in FIG. 5, a scenario 1 is an indoor room 1 and belongs to an indoor scenario type, a scenario 2 is an outdoor scenario type, and a scenario 3 is an indoor room 2 and belongs to the indoor scenario type.

For example, a terminal device has trained or used an AI model 1 in the scenario 1, and has trained or used an AI model 2 in the scenario 2. When the terminal device is located in the scenario 3, because the scenario 3 is also of the indoor scenario type, there is a similarity relationship between the scenario 3 and the scenario 1 in terms of scenario. Therefore, when being located in the scenario 3, the terminal device may train or use the AI model 1.

For example, the terminal device may collect training data 1 in the scenario 1, and collect training data 2 in the scenario 2. When the terminal device is located in the scenario 3, because the scenario 3 is also of the indoor scenario type, there is a similarity relationship between the scenario 3 and the scenario 1 in terms of scenario. Therefore, training data 3 collected by the terminal device in the scenario 3 and the training data 1 may jointly form a training dataset, and the training dataset may be used to train the AI model in the scenario 1 or the scenario 3.

In an implementation, a scenario identifier may be a first network information set. Optionally, the first network information set indicates a scenario identifier between geographically adjacent cells.

Optionally, the first network information set includes identifiers of a plurality of adjacent cells. The plurality of cells may be directly adjacent to each other, or may not be directly adjacent to each other, for example, may be in a relationship of mutual cell adjacency.

The first network information set includes at least one of a cell identifier, a public land mobile network (public land mobile network, PLMN) identity, a tracking area code (tracking area code, TAC), a radio access network identifier (radio access network identifier, RAN ID), a cell frequency, and a cell band that are of the first cell; and the first cell is an adjacent cell of a second cell, and the second cell is a cell in which the terminal device is located.

Optionally, the cell identifier of the first cell may include a global cell identifier and/or a physical cell identifier.

Optionally, the cells are usually deployed in a continuous coverage manner. An NR cell frequency is high, and coverage of each cell is small. Therefore, a plurality of geographically adjacent cells have similar channel features. For example, three cells are deployed within an outdoor range of 1 square kilometer, and the outdoor range of 1 square kilometer is not large. Therefore, the three cells may have similar channel features. Therefore, scenarios of the three cells are similar. Cell information of the three cells may form a first network information set.

Optionally, the first network information set may include a set of network information of a plurality of adjacent cells, or may include a set of network information of adjacent radio access networks (radio access network, RAN), or may include a set of network information of tracking areas (tracking area, TA). This is not limited in this embodiment of this application.

Optionally, the plurality of cells in the first network information set may train or use a same AI model.

Optionally, training data of the plurality of cells in the first network information set may form a training dataset, and the training dataset may be the AI model in the plurality of cells.

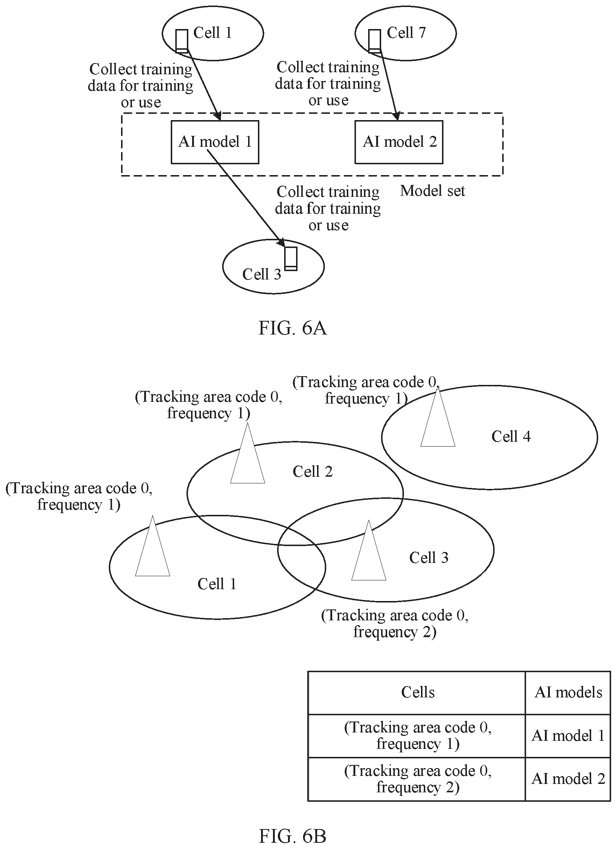

For example, as shown in FIG. 6A, if channel features of cells {1, 2, 3, 4, 5} are similar, there is a similarity relationship between scenarios of the five cells.

Optionally, a terminal device has trained or used an AI model 1 within coverage of the cell 1, and has trained or used an AI model 2 within coverage of a cell 7. When the terminal device is located in the cell 3, because there is a similarity relationship between the scenario of the cell 3 and the scenario of the cell 1, the terminal device may train or use the AI model 1 in the cell 3.

Optionally, the terminal device collects training data 1 within the coverage of the cell 1, and collects training data 2 within the coverage of the cell 7. When the terminal device is located in the cell 3, because there is a similarity relationship between the scenario of the cell 3 and the scenario of the cell 1, when the terminal device is located in the cell 3, the collected training data 3 and the training data 1 may jointly form a training dataset, and the training dataset may be used to train AI models on the terminal device within coverage of the cells {1, 2, 3, 4, 5}.

Optionally, whether there is a similarity relationship between the scenarios of the cells may be determined by determining tracking area codes and cell frequencies of the cells. Alternatively, whether there is a similarity relationship between the scenarios of the cells may be determined by using physical cell identifiers. This is not limited in this embodiment of this application.

For example, as shown in FIG. 6B, a tracking area code of a cell 1 is 0, and a frequency is 1; a tracking area code of a cell 2 is 0, and a cell frequency is 1; a tracking area code of a cell 3 is 0, and a cell frequency is 2; a tracking area code of a cell 4 is 0, and a cell frequency is 1; and if the tracking area codes of the cells are the same and the cell frequencies are the same, there is a similarity relationship between the cells. There is a similarity relationship between the cells 1, 2, and 4 whose tracking area codes of the cells are 0 and whose cell frequencies are 1.

Optionally, the cells 1, 2, and 4 all correspond to training or using an AI model 1. The tracking area code of the cell 3 is 0, the cell frequency is 2, which differ from other cells, therefore, the cell 3 corresponds to training or using an AI model 2.

Optionally, training data collected in the cells 1, 2, and 4 may form a training dataset 1. The tracking area code of the cell 3 is 0, the cell frequency is 2, which differ from other cells, therefore, training data collected in the cell 3 forms a training dataset 2.

Optionally, when a plurality of cells have different tracking area codes, there may also be a similarity relationship between the plurality of cells. For example, there may be a similarity relationship between a cell whose tracking area code of the cell is 0 and whose cell frequency is 1 and a cell whose tracking area code of the cell is 1 and whose cell frequency is 1. This is not limited in this embodiment of this application.

In an implementation, a scenario identifier may indicate a channel feature.

Optionally, the channel feature may include an impulse response feature of a channel, a time-frequency domain response feature of a channel, a transform-domain response feature of a channel, and the like.

The impulse response feature of the channel mainly indicates an impulse response status of the channel in delay domain. The time-frequency domain response feature of the channel mainly indicates a channel response status of the channel in time domain and frequency domain. The transform-domain response feature of the channel mainly indicates a response status of the channel in angle delay domain or Doppler domain, and responses of the channel in transform domain may be more sparse than responses in time-frequency domain.

When a channel feature is described, a corresponding power spectrum or the like may be usually used for description. Because channels may be sparsely distributed in some domains, these sparse distribution may be used as channel feature identifiers for indication. However, it is difficult to describe one distribution in implementation.

A plurality of precoding matrix indicators (precoding matrix indicators, PMIs) are specified in the current NR codebook. These PMIs may indicate a response status of the channel eigenvectors in angle delay domain. Different PMIs may indicate different response features in angle delay domain.

Therefore, in this embodiment of this application, based on a codebook-related technology, the PMI identifier indicates the channel feature, that is, the scenario identifier is the PMI identifier.

In a related technology, a PMI usage manner is as follows: The terminal device first measures a reference signal of a downlink channel, for example, a channel state information reference signal (channel state information reference signal, CSI-RS), and then performs feature decomposition on a channel or a covariance matrix of the channel on each subband, to obtain one or more eigenvectors, where different quantities of eigenvectors correspond to different channel ranks. For example, if a rank is 1, the terminal device obtains one eigenvector, namely, one primary eigenvector. Then, primary eigenvectors on all subbands are transformed into the angle delay domain through two-dimensional discrete Fourier transformation, a PMI closest to an eigenvector after the transformation is selected from the codebook, and is fed back to the network device. Different PMIs may indicate different eigenvectors in angle delay domain. In other words, several typical PMI values may be selected to indicate channel features with an obvious feature.

A PMI defined in the R16 codebook is used as an example. The codebook has been defined in the protocol, and currently there are eight parameter configuration combinations under a same quantity of CSI-RS ports. On a same quantity of subbands, a quantity of feedback bits gradually increases in eight configurations, and the channel eigenvector is more accurately indicated. For example, in CSI feedback in which a quantity of ports is 32, on 13 subbands, a quantity of bits needed by the PMI is between 60 bits and 360 bits.

Optionally, a correspondence between a scenario and a PMI identifier may be predefined. For example, a scenario 1 corresponds to a PMI 1. For example, it may be predefined to use information such as a first configuration, 13 subbands, a quantity of bits between 60 bits and 360 bits, and a frequency domain location.

Optionally, a same AI model may be used in a plurality of scenarios with a same PMI identifier.

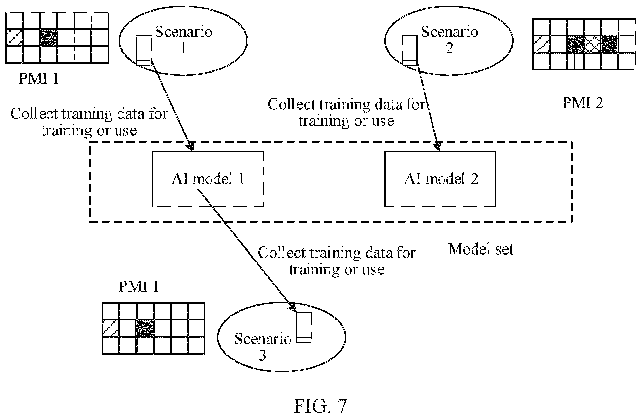

Optionally, a plurality of pieces of training data may be collected in the plurality of scenarios with the same PMI identifier. A training dataset corresponding to the PMI identifier may include the plurality of pieces of training data. The training dataset corresponding to the PMI identifier is used for training the AI model corresponding to the PMI identifier. For example, as shown in FIG. 7, a channel feature in a scenario 1 is a PMI 1, a channel feature in a scenario 2 is a PMI 2, and a channel feature in a scenario 3 is the PMI 1.

Optionally, a terminal device has trained or used an AI model 1 in the scenario 1, and has trained or used an AI model 2 in the scenario 2. When the terminal device is located in the scenario 3, because the channel features in the scenario 3 and the scenario 1 are the same, the terminal device may train or use the AI model 1 in the scenario 3.

Optionally, the terminal device collects training data 1 in the scenario 1, and collects training data 2 in the scenario 2. When the terminal device is located in the scenario 3, because the channel features in the scenario 3 and the scenario 1 are the same, training data 3 collected by the terminal device in the scenario 3 and the training data 1 may form a training dataset, and the training dataset may be used to train the AI model corresponding to the scenario 1 and the scenario 3.

Optionally, one PMI identifier includes one or more PMIs. For example, one PMI identifier includes one PMI.

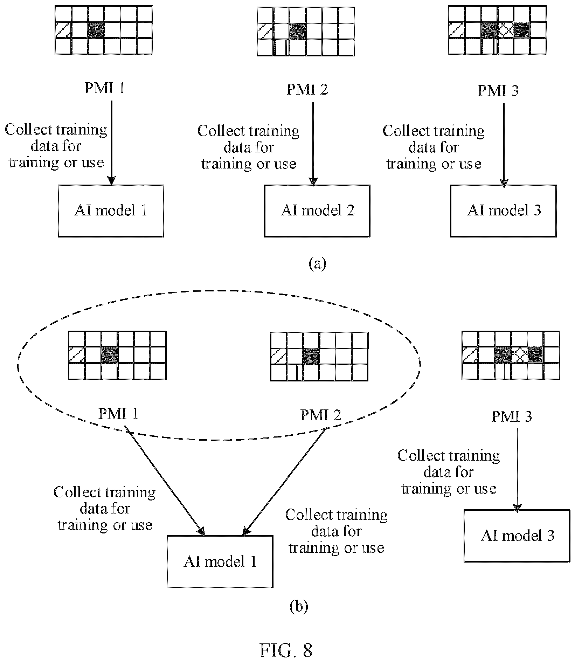

As shown in (a) in FIG. 8, the terminal device trains or uses an AI model 1 in a scenario corresponding to a PMI 1, trains or uses an AI model 2 in a scenario corresponding to a PMI 2, and trains or uses an AI model 3 in a scenario corresponding to a PMI 3.

Optionally, training data collected by the terminal device in the scenario corresponding to the PMI 1 is used as a training dataset 1, training data collected in the scenario corresponding to the PMI 2 is used as a training dataset 2, and training data collected in the scenario corresponding to the PMI 3 is used as a training dataset 3. For example, one PMI identifier includes a plurality of PMIs. For example, when a difference between a plurality of adjacent PMIs in space is small, channel features corresponding to the plurality of adjacent PMIs are similar. In this case, a same AI model is trained and used based on the channel features indicated by the plurality of PMIs.

As shown in (b) in FIG. 8, because a difference between a channel feature indicated by a PMI 1 and a channel feature indicated by a PMI 2 is small, the terminal device trains or uses an AI model 1 in a scenario corresponding to the PMI 1 and a scenario corresponding to the PMI 2; and because channel features indicated by the PMI 1 and the PMI 2 are greatly different from a channel feature indicated by the PMI 3, the AI model 3 is trained or used in a scenario corresponding to the PMI 3.

Optionally, training data collected by the terminal device in the scenario corresponding to the PMI 1 and the scenario corresponding to the PMI 2 is used as a training dataset 1; and the channel features indicated by the PMI 1 and the PMI 2 are greatly different from the channel feature indicated by the PMI 3, and training data collected in the scenario corresponding to the PMI 3 is used as a training dataset 2.

In an implementation, a scenario identifier may be a scenario mark identifier.

Optionally, the scenario mark may not have an actual physical meaning, and is a series of abstract marks agreed on in advance by the terminal device and the network device. For example, the scenario mark may be a numeric number, for example, 1, 2, 3..., or may be a letter number, for example, A, B, C....

Optionally, each scenario is marked, and different scenarios correspond to different marks; and each AI model is also marked, different AI models also correspond to different marks, and there is a mapping relationship between a mark of a scenario and a mark of an AI model corresponding to the scenario.

Optionally, each scenario is marked, and different scenarios correspond to different marks; and a training dataset corresponding to each AI model is also marked, different AI models also correspond to different training datasets, and there is a mapping relationship between a mark of a scenario and a training dataset of an AI model corresponding to the scenario.

Optionally, the mapping relationship may be agreed on by the terminal device and the network device in advance, and is recorded in a preset list. The preset list is stored in the network device or the terminal device. Optionally, scenarios with a same scenario mark use a same AI model.

Optionally, training data collected in the scenarios with the same scenario mark may be classified into a same training dataset for training a same AI model.

For example, a network device vendor A and a terminal device vendor B performing collection in different scenarios in advance to form different training datasets, and perform AI model training to form a preset list. A mapping relationship between the scenarios and AI models may be recorded in the preset list. In this case, a network device A' of the network device vendor A and a terminal device B' of the terminal device vendor B may use a same pair of preset lists to indicate the mapping relationship between different scenarios and the corresponding AI models. For example, a mark of a scenario 1 is "1", a mark of an AI model 1 corresponding to the scenario 1 may be "1‴, and a mapping relationship between the mark of the scenario 1 and the mark of the AI model 1' may be recorded in a preset list.

Optionally, different scenario marks correspond to different AI models, or correspond to training datasets of different AI models. The network device and the terminal device may distinguish between different training datasets based on different scenario marks, to train different AI models.

Optionally, different scenario marks correspond to a same AI model, or correspond to a training dataset of the same AI model. The network device and the terminal device may combine training data collected in different scenarios into the common training dataset, to train the same AI model.

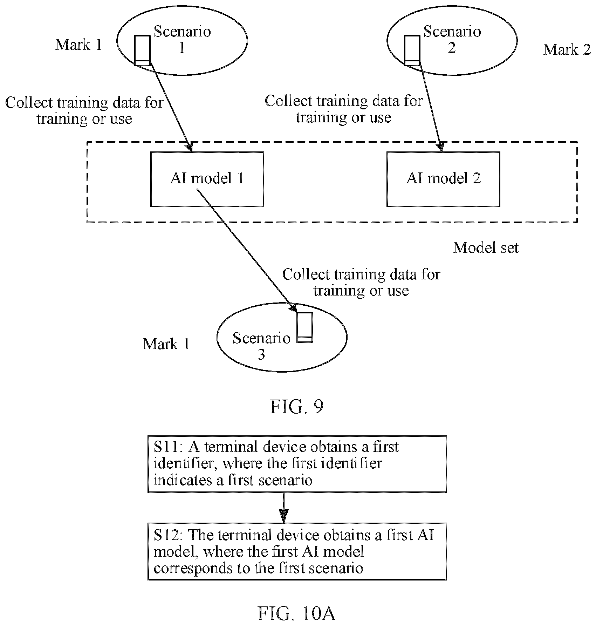

As shown in FIG. 9, a scenario 1 corresponds to a mark 1, a scenario 2 corresponds to a mark 2, and a scenario 3 corresponds to the mark 1.

For example, a terminal device has trained or used an AI model 1 in the scenario 1, and has trained or used an AI model 2 in the scenario 2. When the terminal device is located in the scenario 3, because the scenario 3 also corresponds to the mark 1, there is a similarity relationship between the scenario 3 and the scenario 1 in terms of scenario. Therefore, when being located in the scenario 3, the terminal device may train or use the AI model 1.

For example, the terminal device may collect training data 1 in the scenario 1, and collect training data 2 in the scenario 2. When the terminal device is located in the scenario 3, because the scenario 3 also corresponds to the mark 1, there is a similarity relationship between the scenario 3 and the scenario 1 in terms of scenario. Therefore, training data 3 collected by the terminal device in the scenario 3 and the training data 1 may jointly form a training dataset, and the training dataset may be used to train the AI model in the scenario 1 or the scenario 3.

Optionally, different scenario identifiers correspond to a same network configuration parameter, for example, a network port parameter or a beam configuration parameter. Because the terminal cannot distinguish, by using different network configuration parameters, whether training data is appropriately distinguished into different datasets, the datasets need to be classified by using different identifiers. For example, the terminal may separately classify data collected under different network configuration parameters. After the identification information is provided, it may be considered that data types under a plurality of configuration parameters are the same, and the collected data may be combined into one training dataset.

Optionally, specific types of the foregoing four scenario identifiers are merely examples. There may be further another scenario identifier type. This is not limited in this embodiment of this application.

Optionally, the foregoing plurality of scenario identifier types may be used in combination. Alternatively, when there is a similarity relationship between the scenario type identifiers in two scenarios, whether there is a similarity relationship between other scenarios in the two scenarios may be further determined.

For example, compared with the scenario type identifier, the PMI identifier may further describe a feature in an aspect of a channel in detail. In some embodiments, the scenario type identifier and the PMI identifier may be used in combination.

Based on the foregoing constructed scenario identifier in this embodiment of this application, in this application, an AI model may be determined based on a correspondence between the constructed scenario identifier and the AI model. As shown in FIG. 10A, the method for determining an AI model provided in this embodiment of this application includes the following steps.

S11: A terminal device obtains a first identifier, where the first identifier indicates a first scenario.

In an implementation, the first identifier may include at least one of a scenario type identifier, a first PMI identifier, and a scenario mark identifier.

Optionally, the first identifier may include the scenario type identifier, and the scenario type identifier indicates the first scenario. The first scenario may include an urban macrocell scenario type, an urban microcell scenario type, an indoor scenario type, an outdoor scenario type, and the like. This is not limited in this embodiment of this application.

Optionally, the first identifier may alternatively include the first PMI identifier, the first PMI identifier indicates the first scenario, and the first scenario may include a plurality of scenarios with different channel features.

Optionally, the first identifier may alternatively include the scenario mark identifier, and the scenario mark identifier indicates the first scenario. The first scenario may include a scenario with a plurality of different scenario marks.

Optionally, the scenario mark may not have an actual physical meaning. For example, the scenario mark may be a numeric number.

In an implementation, the first identifier may indicate a first network information set, and the first network information set includes at least one of a cell identifier, a public land mobile network PLMN identifier, a tracking area code TAC, an access network area identifier RAN ID, a cell frequency, and a cell band that are of the first cell; and the first cell is an adjacent cell of a second cell, and the second cell is a cell in which the terminal device is located.

Optionally, the first cell and the second cell may be directly adjacent or may not be directly adjacent.

Optionally, a similarity relationship exists between scenarios of cells in the first network information set.

Optionally, the first scenario is a scenario corresponding to the cell in the first network information set.

In an implementation, a network device sends the first identifier to the terminal device.

Optionally, the network device sends a broadcast message to the terminal device, where the broadcast message carries the first identifier.

Optionally, the broadcast message of the network device may be sent to all terminal devices located within coverage of the network device.

The network device sends the broadcast message to all the terminal devices located within signal coverage of the network device. Therefore, all the terminal devices should understand the broadcast message, and the terminal devices can receive the broadcast message regardless of whether the terminal devices enter a connected state. Therefore, a broadcast manner is applicable to a case in which the first identifier is the scenario type identifier, the first network information set, and the first PMI identifier. Because these identification information has a specific meaning, and may be understood by terminal devices of different vendors, all the terminal devices and the network device may understand a meaning of the first identifier.

For example, a network device 1 determines that a terminal device 1 is located indoors, the network device 1 broadcasts the indoor scenario type identifier by using the broadcast message, the terminal device 1 is located within coverage of the network device 1, and the terminal device 1 receives the broadcast message. The terminal device 1 may learn that the terminal device 1 is located in the indoor scenario type.

Optionally, the network device sends dedicated signaling to the terminal device, where the dedicated signaling carries the first identifier.

Optionally, the dedicated signaling may be dedicated signaling between the terminal device and the network device, and may be used to transmit scenario marks/identifiers between some terminal devices and the network device. For example, the dedicated signaling may be RRC configuration signaling.

Optionally, the dedicated signaling is applicable to a case in which the first identifier is the scenario type identifier, the first network information set, the first PMI identifier, and the scenario mark identifier.

In an embodiment, the terminal device determines the first identifier based on the first scenario of the terminal device.

Optionally, the terminal device may obtain surrounding scenario information, namely, scenario information of the first scenario, and determine, based on the scenario information, the first identifier corresponding to the scenario (the first scenario). For example, an example in which the terminal device is a mobile phone is used. It is learned based on positioning information of the mobile phone that the mobile phone is located in a shopping mall A. Therefore, the mobile phone may determine that an indoor scenario is used in this case, and a corresponding first identifier is the indoor scenario identifier. In addition, the mobile phone may further determine features of a channel in the current scenario based on a feature of a radio signal, for example, obtain features in time domain and angle domain of the channel through channel measurement, and determine whether the channel is in a dense or open scenario.

S12: The terminal device obtains a first AI model, where the first AI model corresponds to the first scenario.

Optionally, when the first identifier is the scenario type, each scenario type has a corresponding first AI model.

For example, when the terminal device is located in a scenario of this type of an urban macrocell, a corresponding first AI model is a first AI model corresponding to the urban macrocell scenario type.

Optionally, when the first scenario is the scenario with different channel features, a scenario with each channel feature has a corresponding first AI model.

Optionally, when the first scenario is a scenario with a plurality of different scenario marks, a scenario with each scenario mark has a corresponding first AI model.

Optionally, when the first scenario is the scenario corresponding to the cell in the first network information set, a scenario corresponding to each cell in the first network information set has a corresponding first AI model.

Optionally, a same first AI model may be used in scenarios with a same first identifier, or training data collected in the scenarios with the same first identifier is used as a training dataset, to train the first AI model. For example, a same first AI model may be used in scenarios with a same scenario mark identifier, or training data collected in the scenarios with the same scenario mark identifier is used as a training dataset, to train the first AI model. For example, a plurality of cells in the first network information set may use a same first AI model.

In an implementation, the terminal device obtains the first AI model based on the first identifier and the collected training data. For example, after receiving the first identifier from the network device, the terminal device determines, based on the first identifier, the first scenario of the terminal device; and the terminal device obtains the first AI model through training based on the training data, where the training data corresponds to the first scenario. For example, the terminal device sends the training data to the network device, and the network device performs training based on the training data, and then sends the trained model to the terminal device. In an implementation, after determining the first identifier based on the first scenario, the terminal device determines, based on the training data, a training dataset for training the first AI model, where the training dataset corresponds to the first scenario.

Optionally, the terminal device may associate each piece of collected training data with the first identifier.

Optionally, the terminal device may train a new first AI model based on the training data, or may perform optimization training on an existing first AI model, or may continue to train a first AI model that is partially trained.

Optionally, the terminal device may obtain surrounding scenario information data for training. The scenario information data includes a channel measurement result, a beam measurement result, a location measurement result, and the like in the scenario.

Optionally, the terminal device may determine the corresponding first AI model based on the first identifier sent by the network device.

For example, the terminal device receives the first identifier sent by the network device, and the terminal device obtains the surrounding training data of the terminal device, namely, the collected training data. There is a mapping relationship between the first AI model obtained by the terminal device through training based on the training data and the first identifier sent by the network device.

Optionally, the first AI model may be trained on a training node. The training node may be an application server, for example, a cloud server of a terminal vendor or a third-party server.

Optionally, different first identifiers correspond to a same network configuration parameter, and the network configuration parameter includes different antenna ports, beam parameters, and the like. This is because the terminal device cannot distinguish different training data by using different network configuration parameters, cannot distinguish whether the training data can be classified into one type, and needs to perform scenario classification on the training data by using the different first identifiers.

Optionally, the terminal device may determine the first identifier corresponding to the surrounding scenario information, and the terminal device trains the training data based on the surrounding scenario information, to obtain the first AI model corresponding to the first identifier.

Optionally, the terminal device receives the first AI model from a network device; and the network device may be a network side device such as a base station, or may be an application server, such as a cloud server of the terminal vendor.

For example, the terminal devices may send training data and scenario information to the cloud server. The cloud server forms a training dataset based on the scenario information obtained by a plurality of terminal devices and the training data collected in a corresponding scenario, and performs training to obtain the first AI model corresponding to the first identifier.

Optionally, the terminal device obtains the first AI model from locally stored AI models. For example, the terminal device locally stores an AI model library, the AI model library includes a plurality of AI models, and the terminal device obtains the first AI model from the AI model library.

Optionally, the terminal device generates a correspondence between the first identifier and the first AI model.

For example, the first identifier corresponds to the first scenario, and the first scenario corresponds to training or using the first AI model. Then, the terminal device may generate and store a correspondence between the first identifier and the first AI model, or the network device stores the correspondence. Further, when the terminal device needs to determine the AI model, the terminal device obtains the correspondence, and determines to obtain the first AI model based on the correspondence.

The following embodiments 1 to 4 separately describe cases in which different first identifiers indicate a similar scenario, an AI model that needs to be used or a training dataset corresponding to the AI model is determined, and first identifiers are sent in different message sending manners.

Embodiment 1 provides a manner in which a scenario type identifier indicates a scenario, and the network device sends a first identifier by using a broadcast message.

In this embodiment, the network device and the terminal device may understand a plurality of scenario type identifiers. Optionally, the plurality of scenario type identifiers may be predefined in a standard.

Optionally, the scenario type identifier indicates a scenario type with an obvious feature, and may be a specific environment scenario type name.

For example, the scenario type identifier may be an urban macrocell (urban macrocell, Uma) scenario type identifier, an urban microcell (urban microcell, Umi) scenario type identifier, an indoor (indoor) scenario type identifier, an outdoor (outdoor) scenario type identifier, or the like. This is not limited in this embodiment of this application.

In this embodiment of this application, an example in which the network device is a cell is used. Optionally, each cell may know a scenario type feature of the cell, to learn a scenario type identifier of the cell based on the scenario type feature. For example, during deployment, each cell may determine a scenario type feature of the cell based on a deployment location. For example, if a cell 1 is deployed indoors, a scenario type identifier of the cell 1 is the indoor scenario type identifier.

Optionally, the cell 1 may collect channel feature information within coverage of the cell 1, and determine the corresponding scenario type identifier based on the channel feature information.

Optionally, after obtaining the scenario type identifier of the cell 1, the cell 1 may provide the scenario type identifier for a terminal device that actively enters the coverage of the cell 1.

For example, if the cell 1 is in an indoor scenario, the scenario type identifier of the cell 1 is an indoor scenario identifier. When the terminal device 1 enters the coverage of the cell 1, the terminal device 1 is also located in the indoor scenario. The cell 1 may send a broadcast message to the terminal device 1, where a first identifier carried in the broadcast message is the indoor scenario identifier. The terminal device 1 trains or uses a first AI model in the corresponding indoor scenario based on the indoor scenario identifier carried in the broadcast message.

Optionally, the terminal device collects training data of different scenario types based on different scenario type identifiers, to form training datasets of different scenario types, to train different first AI models. The terminal device may establish an association relationship between different scenario type identifiers and different first AI models. The terminal device may further establish an association relationship between different scenario type identifiers and training datasets of different first AI models. The terminal device obtains different scenario-based first AI models based on different scenario type identifiers.

For example, in the indoor scenario type, the terminal device may train a first AI model of the indoor scenario type based on training data collected based on the indoor scenario type. In an outdoor scenario type, a first AI model of the outdoor scenario type is also trained based on training data collected based on the outdoor scenario type.

Optionally, a plurality of scenario-based first AI models may be stored in the terminal device, or may be stored in the cloud server of the terminal device vendor.

Optionally, a plurality of scenario-based first AI models may be trained by the terminal device, or may be trained by the cloud server of the terminal device vendor.

Optionally, the terminal device may send the collected training data and the corresponding scenario identifier to the cloud server of the terminal device vendor.

Optionally, a plurality of scenario-based first AI models are stored in the cloud server of the terminal device vendor. The terminal device requests a needed first AI model from the cloud server, and the cloud server sends the needed first AI model to the terminal device.

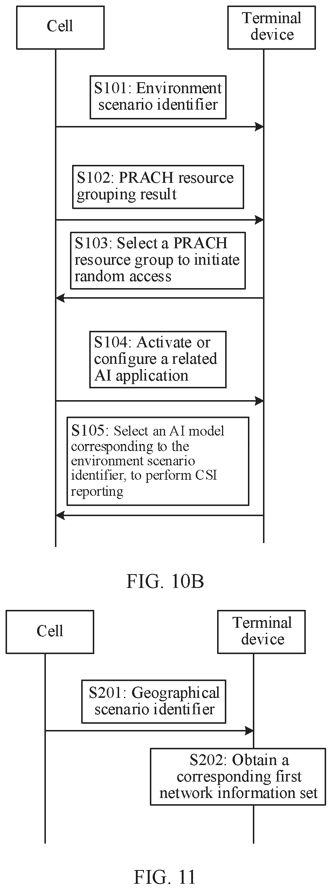

FIG. 10B is a flowchart of determining an AI model, including steps S101 to S105.

S101: A cell sends, to a terminal device by using a broadcast message, a scenario type identifier corresponding to the current cell.

Optionally, the broadcast message 80 may include a system information block 1 (system information block 1, SIB 1), and the SIB 1 carries the scenario type identifier corresponding to the current cell. For example, the scenario type identifier corresponding to the current cell is an indoor scenario identifier.

Optionally, a location of the scenario type identifier carried in the SIB 1 may be some fields of the SIB 1. For example, the scenario type identifier is carried in a PRACH-related configuration of the SIB 1; is carried in serving cell information of the SIB 1; or is carried in a field separately set in the SIB 1 or the like. This is not limited in this embodiment of this application.

Optionally, the broadcast message may further include another SIB broadcast message. This is not limited in this embodiment of this application.

Optionally, a class of the scenario type identifier may be predefined in a standard.

Optionally, the terminal device or the cell can support some scenario type identifiers or all scenario type identifiers. For example, it may be predefined in the standard that classes of all the scenario type identifiers need to be supported by the terminal device and the cell. That is, the terminal device and the cell need to know meanings of all the scenario type identifiers. For example, it may alternatively be predefined in the standard that the terminal device or the cell can support only some scenario type identifiers. For example, a terminal device of a terminal device vendor may support only two scenario type identifiers: an indoor scenario type identifier and an outdoor scenario type identifier.

Optionally, when the terminal device supports some scenario type identifiers, the cell needs to obtain a status that the terminal device supports the scenario type identifiers.

S102: The cell sends a PRACH resource grouping result to the terminal device.

Optionally, the cell groups PRACH resources in a PRACH configuration, and different resource groups correspond to capabilities of which the cell supports the scenario type identifiers.

Optionally, a PRACH resource grouping rule may be predefined in the standard. For example, an example in which 64 random access preamble sequences are grouped is used. For example, it is specified that random access preamble sequences 0 to 32 are a group A, which indicates that the terminal device supports the scenario type identifier broadcast by the cell, that is, the terminal device has a first AI model corresponding to the cell scenario type identifier. Random access preamble sequences 32 to 64 are a group B, which indicates that the terminal device does not support the scenario type identifier broadcast by the cell, that is, the terminal device does not have the first AI model corresponding to the cell scenario type identifier.

S103: The terminal device receives the broadcast message of the cell, and initiates a random access process.

Optionally, after obtaining the scenario type identifier sent by the current cell, the terminal device selects, based on a status that the terminal device supports the scenario type identifier of the cell, different PRACH resource groups to initiate random access. For example, the scenario type identifier broadcast by using the broadcast message of the cell is the indoor scenario type identifier. If the terminal device supports the indoor scenario type identifier, or the terminal device has the scenario-based first AI model corresponding to the indoor scenario type identifier, the terminal device selects a corresponding PRACH resource group for access. For example, the terminal device selects a random access sequence in a PRACH resource group A to initiate the random access. Otherwise, the terminal device selects a random access sequence in a PRACH resource group B to initiate the random access.

Optionally, the cell may determine, based on a received PRACH resource access status sent by the terminal device, whether the terminal device supports the scenario type identifier.

S104: The cell may further activate or configure a related AI application for the terminal device.

Optionally, AI-based CSI feedback reporting of the terminal device may be configured in an RRC configuration message subsequently sent to the terminal device.

Optionally, CSI feedback is of a dual-ended model structure, that is, first AI models on a network device and the terminal device need to be used together. Therefore, the network device (namely, the cell) broadcasts the scenario type identifier of the network device. In this case, after a CSI feedback function is activated, the cell may use the scenario-based first AI model corresponding to the scenario type identifier of the cell. The terminal device also performs CSI feedback based on the scenario type identifier broadcast by the cell and by using the corresponding first AI model.

Optionally, for another single-ended model structure, for example, AI beam management and AI positioning, if the first AI model is deployed on the terminal device, the terminal device may also determine the current scenario based on the scenario type identifier provided by the cell. This is because the determining of the terminal device itself may not be completely accurate, and the cell knows complete information in coverage of the cell. The terminal may determine the corresponding first AI model based on the scenario type identifier provided by the cell.

S105: The terminal device selects the first AI model corresponding to the scenario type identifier, to perform CSI reporting.

Optionally, after the related CSI reporting is configured in the cell, the terminal device may perform CSI encoding and reporting by using the corresponding first AI model based on the corresponding scenario type identifier in the broadcast message.

In addition, in the manner provided in Embodiment 1, the terminal device may further establish an association relationship between training data collected in the cell and the scenario identifier. The terminal device may classify the collected training data into a training dataset used for AI model training in the corresponding scenario.

Optionally, after receiving the scenario type mark indicated by the network device, the terminal device marks the collected training data as belonging to the corresponding scenario type, and may use the collected training data as a part of the training dataset of the corresponding scenario type, to train the first AI model in the corresponding scenario.

According to the implementation in Embodiment 1, the network device sends the scenario type identifier of the network device in a manner of sending the broadcast message, which is simple in implementation. The terminal device or the network device may generate corresponding scenario-based first AI models in advance in a plurality of predefined scenario types, so that a consistent scenario understanding of the network device and the terminal device can be determined based on scenario type identifiers as indexes, and an appropriate scenario-based first AI model is selected.

Embodiment 2 provides a manner in which a first network information set indicates a scenario, and the network device sends a first identifier by using a broadcast message.

Optionally, an example in which the network device is a cell is used. The first network information set includes a plurality of adjacent cells. A similarity relationship exists between scenarios of the plurality of adjacent cells in the first network information set.

For example, FIG. 11 is a flowchart of determining an AI model. A procedure includes steps S201 and S202.

S201: A cell sends, to a terminal device by using a broadcast message, a first network information set corresponding to the current cell.

Optionally, the broadcast message may include a SIB 3 or a SIB 4, and the SIB 3 or the SIB 4 carries the first network information set corresponding to the current cell. For example, the first network information set corresponding to the current cell may be a cell information list including the current cell. The cell information list includes information about a plurality of cells, and there is a similarity relationship between scenarios of the plurality of cells in the cell information list.

Optionally, the cell list may include at least one of a global cell identifier, a physical cell identifier PCI, a public land mobile network PLMN identifier, a tracking area code TAC, an access network area identifier RAN ID, a cell frequency, and a cell band.

Optionally, the broadcast message may further include another SIB broadcast message. This is not limited in this embodiment of this application.

Optionally, the cell information list may include specific information of one or more cells, or may include information of one or more large-range cells. For example, the cell information list includes the tracking area code, the cell frequency, and the like.

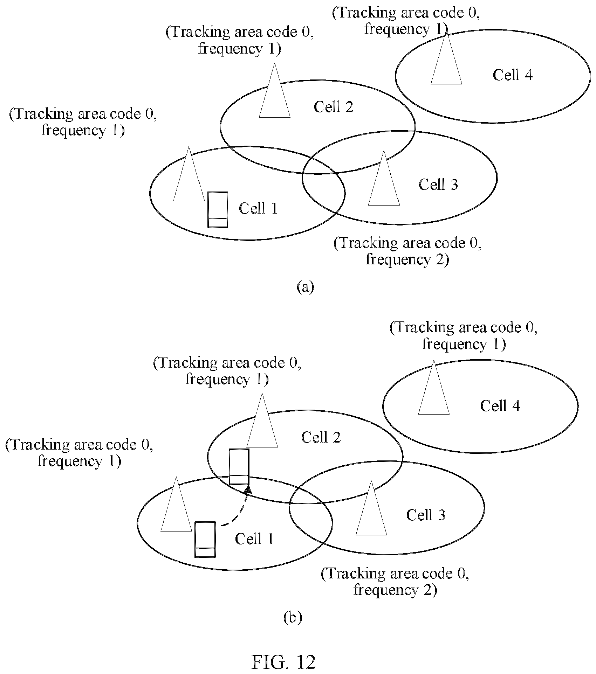

As shown in (a) in FIG. 12, a tracking area code of a cell 1 is 0, and a frequency is 1; a tracking area code of a cell 2 is 0, and a cell frequency is 1; a tracking area code of a cell 3 is 0, and a cell frequency is 2; a tracking area code of a cell 4 is 0, and a cell frequency is 1; and the cell 1 sends, to the terminal device by using a broadcast message, a cell information list corresponding to the current cell. The cell list includes the cell 1, the cell 2, and the cell 4.

If the tracking area codes of the cells are the same and the cell frequencies are the same, there is a similarity relationship between scenarios of the cells. There is a similarity relationship between the cells 1, 2, and 4 whose tracking area codes of the cells are 0 and whose cell frequencies are 1, and the cells 1, 2, and 4 all correspond to training or using a first AI model 1. Because the tracking area code of the cell 3 is 0, the cell frequency is 2, and the cell 3 is different from other cells, the cell 3 corresponds to training or using a second AI model.

Optionally, if the tracking area codes of the cells are the same and the cell frequencies are the same, there is a similarity relationship between scenarios of the cells. There is the similarity relationship between the cells 1, 2, and 4 whose tracking area codes are 0 and whose cell frequencies are 1, and training data collected in the cells 1, 2, and 4 may be used as a training dataset of the first AI model. Because the tracking area code of the cell 3 is 0, the cell frequency is 2, and the cell 3 is different from other cells, training data collected in the cell 3 may be used as a training dataset of the second AI model.

S202: The terminal device receives the broadcast message from the cell, and obtains a first network information set corresponding to the cell.

Optionally, the terminal device trains or uses the corresponding first AI model based on the first network information set in the broadcast message.

In an implementation, an adjacent cell measurement list is included in a measurement configuration message. On a basis that the cell sends the broadcast message, when sending the measurement configuration message to the terminal device, the cell sends the first network information set of the cell. The first network information set includes the cell information list.

Optionally, the adjacent cell measurement list includes PCIs of adjacent cells to be measured and frequency information.

Optionally, when sending the measurement configuration message to the terminal device, the cell includes the first network information set of the cell.

For example, the first network information set of the cell is written to a field such as measurement configuration MEAS-CONFIG in an RRC configuration delivered by the cell. In this field, a piece of list information may be similarly added, to indicate that a cell adjacent to a corresponding PCI or a cell corresponding to a frequency has a same cell scenario type as the current cell.

Optionally, a set of rules may alternatively be predefined in a standard, indicating that the adjacent cell and the current cell have the same cell scenario type.

Optionally, after the cell includes the first network information set of the cell in the adjacent cell measurement list, the terminal device may consider that the adjacent cell included in the cell information list in the first network information set has the same first network information set as the current cell. Therefore, if the terminal device switches to the adjacent cell in the cell information list, the terminal device may not need to change the first AI model, and the terminal device may also combine training data collected in the adjacent cell and training data collected in a source cell into a same training dataset.

In an implementation, when the terminal device performs inter-cell switching, the cell includes a scenario identifier in a switching command, to indicate whether there is a similarity relationship between a scenario identifier of a target cell and a scenario identifier of the source cell. The identifier may be used by the terminal device to determine, in the target cell after the terminal device completing the cell switching, whether to maintain the original first AI model. The identifier may be further used by the terminal device to determine, after the terminal device completes the cell switching, whether the training data collected in the target cell and the training data collected in the source cell belong to a same training dataset.

As shown in (b) in FIG. 12, a tracking area code of a cell 1 is 0, and a frequency is 1; a tracking area code of a cell 2 is 0, and a cell frequency is 1; a tracking area code of a cell 3 is 0, and a cell frequency is 2; a tracking area code of a cell 4 is 0, and a cell frequency is 1; and when the terminal device moves from the cell 1 to the cell 2, a switching command sent by the cell 1 carries a scenario identifier.

Optionally, the scenario identifier is only a "yes" or "no" identifier, indicating whether a scenario identifier of a destination cell after switching is the same as a scenario identifier of a source cell. For example, when the terminal device moves from the cell 1 to the cell 2, and the scenario identifier is "yes", it indicates that a scenario identifier of the cell 2 after the switching is the same as a scenario identifier of the cell 1.

Optionally, the switching command carries a cell list, where the list includes information about one or more cells, indicating that there is a similarity relationship between the scenario identifier of the destination cell and a scenario identifier of a cell in the list. The terminal device may determine, in the destination cell after the switching, whether a first AI model needs to be changed. The terminal device may further determine whether training data collected in the destination cell needs to be classified into a training dataset different from a training dataset to which training data collected in the source cell is classified. For example, when the terminal device moves from the cell 1 to the cell 2, the cell list in the switching command includes the cell 1, the cell 2, and the cell 4.

Optionally, the cell may alternatively obtain, by exchanging context information of the terminal device, a status that the terminal device supports the scenario identifier of the cell. For example, in a switching process, the source cell may send a context of the terminal to the destination cell. Specifically, the source cell sends, to the destination cell, a status that the terminal device supports the scenario identifier in the source cell. In this case, the destination cell may directly obtain the status that the terminal supports the scenario identifier. After the switching is completed, the destination cell directly obtains, without re-querying, a status that the terminal device supports the scenario identifier in the destination cell.

Optionally, if the terminal device does not receive the first network information set of the cell, the terminal device may consider that there is no corresponding first AI model in the current cell, and the first AI model cannot be used. However, the terminal device may collect the training data in the current cell, associate the collected training data with the first network information set, and use the collected training data as the training dataset of the AI model corresponding to the cell in the first network information set.

Optionally, if the cell does not send the first network information set of the cell, it may be agreed in a predefined manner that the terminal device does not support a first identifier of the cell, or the terminal device does not have the corresponding first AI model.

Optionally, if the cell sends the first network information set, it indicates that there is a similarity relationship between the cell and another cell, but the terminal cannot obtain the corresponding first AI model. For example, if a model library of the terminal does not include this type of cell, the terminal cannot use a corresponding scenario model in the cell. In this case, the cell may be notified of the first identifier of the cell or a status of supporting the first AI model.

Optionally, even if the cell does not support the scenario model, the terminal device may still collect data in the cell for training the first AI model. In this case, the training dataset of the first AI model is autonomously determined by the terminal device.

According to the method in Embodiment 2, the corresponding first network information set of the terminal device may be indicated by defining a scenario similarity relationship between the geographically adjacent cells, and a specific type of a scenario type does not need to be defined, thereby reducing dependency on scenario type definition. In addition, due to a feature of continuous coverage of network devices, there is a similarity between scenarios of geographically adjacent cells. Therefore, by defining the similarity relationship in terms of geographical location, an effect of indicating the scenario identifier can be achieved.

Embodiment 3 provides a manner in which a first PMI identifier indicates a similarity identifier, and the network device sends a first identifier by using a broadcast message.

Optionally, the first PMI identifier indicates a coarse-grained feature of a current channel.

Optionally, the coarse-grained feature of the channel may include a delay distribution feature of the channel, an angle distribution feature of the channel, a Doppler distribution feature of the channel, and the like.

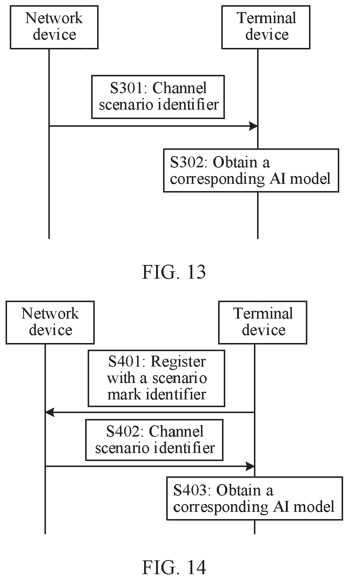

FIG. 13 is a flowchart of determining an AI model, including steps S301 and S302.

S301: A cell sends, to a terminal device by using a broadcast message, a first PMI identifier corresponding to the current cell.

Optionally, the broadcast message may include a SIB 1, and the SIB 1 carries the first PMI identifier corresponding to the current cell.

Optionally, the network device sends one first PMI identifier based on codebook information in a current protocol. For example, the current protocol is an R16 codebook. In a manner defined in the protocol, the terminal device and the network device agree on a configuration used for the indicated PMI and a quantity of bits that need to be transmitted. The network device may use the PMI to indicate a type of features of a channel of the current cell, for example, features of the channel in angle domain or delay domain.

S302: The terminal device receives the first PMI identifier, and the terminal device determines a corresponding first AI model based on the first PMI identifier.

Optionally, the terminal device may select, from models stored in the terminal device, the first AI model corresponding to the PMI.

Optionally, the terminal device may select, from models stored in a terminal vendor cloud server, the first AI model corresponding to the PMI.

Optionally, if determining, from a model library of the terminal device, that there is no first AI model corresponding to the PMI, the terminal device may select, from first AI models corresponding to existing PMIs, an AI model corresponding to a PMI that is closest to a channel eigenvector corresponding to the PMI. For example, a maximum cosine similarity between channel eigenvectors corresponding to the two PMIs is selected.

Optionally, based on the codebook defined in a standard, there are a plurality of PMI combinations in different CSI feedback configurations, and a quantity of used PMIs may be limited, that is, there are only several PMI indicates channel features. Specifically, PMIs corresponding to some channel eigenvectors with a large channel feature differentiation degree may be selected as channel feature marks. For example, in the channel eigenvectors corresponding to the PMIs, some PMIs that have a large difference in delay distribution, a large difference in angle domain distribution, or a large difference in a combination of the delay distribution and the angle domain distribution are used for the first PMI identifier.

Optionally, a specifically used PMI may not be limited in advance, and is determined based on implementation. For example, based on a CSI feedback configuration type defined in the standard, a quantity of PMIs that may be used is 100. In this case, the network device may indicate a current channel feature based on any one of the 100 PMIs. When training the first AI model, the terminal device may train one pair of first AI models for each of the 100 PMIs, or may classify, in advance, PMIs corresponding to some possibly approximate channel eigenvectors into one class, to reduce training costs. For example, the terminal device may correspondingly train only 50 first AI models, and each first AI model may be determined by using one or more PMIs as a scenario identifier.

Optionally, the terminal device has not performed training in channel feature scenarios corresponding to some PMIs. For example, no data has been collected in a cell indicated by a corresponding PMI. Because eigenvectors corresponding to PMIs defined in the standard are actually a series of vectors evenly distributed in high-dimensional space, channel features of the PMIs that are close in a cosine similarity usually tend to be approximate. Therefore, if the terminal device cannot obtain the first AI model corresponding to the PMI indicated by the network device, the terminal device may alternatively determine, as the corresponding first AI model through comparison by using a method for indicating that the channel eigenvectors corresponding to the PMIs are similar in the cosine similarity, an AI model that may be the most similar in the existing first AI models on the terminal device.

Optionally, it is predefined that the terminal device selects a PMI corresponding to a closest eigenvector. Alternatively, a threshold is predefined. For example, if the cosine similarity is less than the threshold, a corresponding first AI model that is similar may be selected.

In an implementation, the terminal device may alternatively autonomously obtain a current PMI through calculation. If a difference between the current PMI and the PMI in the first PMI identifier sent by the network device is large, the PMI sent by the network device is used.

The terminal device may measure a downlink channel by using a CSIRS, and obtain a corresponding PMI. Therefore, there may be a difference between the first PMI identifier used by the network device to indicate the channel feature and the PMI obtained by the terminal device by measuring the downlink channel. This is because the first PMI identifier identifying the channel feature is usually a statistic of whole channels with specific coverage of the network device, and indicates an overall channel feature status of a large quantity of terminal devices in the coverage, and a PMI is used to describe a status of a statistical feature. In addition, the PMI obtained through measurement and calculation performed by the terminal is actually an instantaneous channel feature status, and may be different from the overall channel feature status due to multipath impact at a measurement moment or the like.

Optionally, after receiving the first PMI identifier sent by the network device, the terminal device performs channel measurement for a period of time, and calculates several PMIs. If finding that all the obtained PMIs through calculation are different from the PMI sent by this base station, the terminal device notifies the network device that the terminal device does not support the scenario.

Optionally, alternatively, the terminal device may obtain, by measuring a channel, a channel feature such as a delay domain power spectrum or an angle domain power spectrum, and directly compare delay angle distribution corresponding to the PMI indicated by the network device with delay angle distribution measured by the network device. If a difference is large, the terminal device may also notify the network device that the terminal device does not support the scenario.

In an implementation, if the terminal device does not receive the first PMI identifier, the terminal device may consider that the first AI model is not used in the current cell. The terminal device may collect the training data in the current cell, associate the training data with the PMI identifier determined by the terminal device, and use the training data as a training dataset of the AI model corresponding to the PMI identifier determined by the terminal device.

In Embodiment 3, the channel feature is used as the scenario identifier, and compared with the scenario type, the channel feature of the corresponding scenario may be described more accurately. In addition, compared with a manner of using a feature such as delay domain distribution or angle domain distribution for direct indication, an existing PMI is used for indication, so that a channel distribution feature can be described to some extent, and how to describe a distribution feature and another work redefined in a standard can also be avoided.

Embodiment 4 provides a manner in which a scenario mark identifier indicates a similarity identifier, and the network device sends a first identifier by using a broadcast message.

In the foregoing embodiments 1 to 3, the used first identifier, for example, a scenario type identifier, is applicable to a terminal device of a vendor and network devices of a plurality of vendors. The identifier indicated by the network device may be understood by terminal devices of a plurality of different vendors. For example, if it indicates that the scenario type identifier is "UMA", regardless of which vendor generates a terminal device, the terminal device may learn that "UMA" of the scenario corresponds to the first AI model. Certainly, different terminal device vendors may implement different first AI models in the UMA scenario. In a scenario of a dual-ended model, the network device may alternatively use different first AI models when matching different terminal device vendors.

In addition, a problem of matching between the first identifier and the first AI model is essentially a problem of how to find the corresponding first AI model by using the first identifier as an index. In the foregoing embodiments, all indexes are indexes with clear physical meanings.

In an implementation method, an index without a physical meaning, for example, a mark, is directly used as an index of a scenario, and is used by the terminal device to obtain a corresponding first AI model.

When the mark is used as the first identifier, the terminal device and the network device need to agree on a correspondence between the mark and the corresponding first AI model. In addition, the mark is needed to be unique as much as possible.

Optionally, each scenario is marked, and different scenarios correspond to different marks; and each AI model is also marked, different AI models also correspond to different marks, and there is a mapping relationship between a mark of a scenario and an AI model corresponding to the scenario.

Optionally, each scenario is marked, and different scenarios correspond to different marks; and a training dataset of each AI model is also marked, different AI models also correspond to different training datasets, and there is a mapping relationship between a mark of a scenario and a training dataset of an AI model corresponding to the scenario.

Optionally, the mapping relationship may be determined by vendors in advance, and is sent to a network device and/or a terminal device produced by the vendors. For example, when being in a same scenario, the network device and/or the terminal device register a scenario mark of the scenario in a list known by both parties.

Optionally, the mapping relationship may be a preset list, and is stored in the network device or the terminal device.

For example, in the scenario of the dual-ended AI model, a network device vendor A and a terminal device vendor B perform agreement in advance, and train the dual-ended AI model, to form a mapping relationship between a network device A' of the network device vendor A and a terminal device B' of the terminal device vendor B and a preset list. In this case, a network device A' and a terminal device B' may use a same pair of preset lists to indicate the mapping relationship between different scenarios and corresponding first AI models. For example, a mark of a scenario 1 is "1", a mark of a first AI model 1 corresponding to the scenario 1 may be "1‴, and the mark of the scenario 1 and the mark of the first AI model 1 may be recorded in a preset list.

FIG. 14 is a flowchart of determining an AI model, including steps S401 to S403.

S401: A terminal device and a network device determine scenario mark identifiers in different scenarios in a pre-agreed manner.

Optionally, when the terminal device and the network device are in a same scenario, the two parties agree on a common scenario mark identifier. For example, the terminal device registers with a network device side, and obtains a corresponding scenario mark identifier, so that the terminal device may establish a mapping relationship between a scenario mark and a specific scenario.

Optionally, the mapping relationship may be a preset list, and is stored in the network device or the terminal device.

Optionally, the terminal device registers with the network device side offline in different scenarios.

For example, before a type of terminal devices are launched, a terminal device vendor completes registration of scenario marks in different scenarios in advance, where the scenario marks correspond to corresponding scenarios, and sends corresponding results between the corresponding marks and the scenarios to a network device vendor to complete the registration. In this way, the terminal device can directly use the scenario mark after accessing a network.

Optionally, the terminal device registers with the network device side online in different scenarios.

For example, when the terminal device is located in a new scenario, the terminal device considers that the new scenario is not stored in a preset list. The terminal device initiates registration behavior to the network device, and the network device allocates a corresponding scenario mark to the terminal device in the scenario, so that the network device and the terminal device can establish a mapping relationship between the scenario and the scenario mark.

Optionally, for different scenarios, the terminal device and the network device perform registration in the preset list managed by a third party. For example, before the terminal device and the network device are launched for use, different scenario mark identifiers are agreed on for different scenarios, and the scenario mark identifiers and corresponding scenario information are registered in the list managed by the third party. After the terminal device accesses the network, the network device determines, based on a current scenario, a common scenario mark identifier that is of the two parties and that corresponds to the current scenario, and indicates the scenario mark identifier to the terminal device. Therefore, the network device and the terminal device can establish a mapping relationship between the scenario and the scenario mark.

S402: The network device sends, to the terminal device by using dedicated signaling, a scenario mark identifier corresponding to the current network device.

Optionally, the dedicated signaling may be dedicated signaling between the network device and the terminal device, for example, may be an RRC configuration message.

Optionally, the scenario mark identifier is carried by using the dedicated signaling.

Optionally, both the network device and the terminal device store a list of scenario marks corresponding to the current scenario.

S403: The terminal device receives the scenario mark identifier from the network device, and determines a corresponding first AI model based on the scenario mark identifier.

Optionally, the terminal device obtains, based on the scenario mark identifier in the preset list, the first AI model corresponding to the identifier.

Optionally, the terminal device determines, based on the scenario mark identifier and collected training data, a training dataset corresponding to the scenario, where the training dataset is used to train the first AI model.

Optionally, the terminal device and the network device may determine, in the pre-agreed manner, that different scenario mark identifiers correspond to different first AI models.

Optionally, the terminal device and the network device may determine, in the pre-agreed manner, that different scenario mark identifiers correspond to different training datasets of first AI models.

Optionally, the terminal device and the network device may determine, in the pre-agreed manner, that different scenario mark identifiers correspond to a same first AI model.

Optionally, the terminal device and the network device may determine, in the pre-agreed manner, that different scenario mark identifiers correspond to a same training dataset of a first AI model.

For example, although there are different scenario marks, the network side actually considers that a same or similar network configuration parameter is currently used, for example, a network port parameter or a beam configuration parameter. Therefore, different scenario marks correspond to a same network configuration parameter or similar network configuration parameters. Because the terminal cannot directly distinguish, by using a same network configuration parameter or different network configuration parameters, whether training data is appropriately distinguished into different datasets, the datasets need to be classified by using different identifiers. For example, the terminal may separately classify data collected under different network configuration parameters. After the network device provides identification information, it may be considered that data types under a plurality of configuration parameters are the same, and the collected data may be combined into one training dataset.

Optionally, different terminal devices may register with different scenario marks in a same scenario.

In this embodiment of this application, the network device may explicitly indicate the first AI model that should be used by the terminal device, so that efficiency is higher.

In an implementation, when the terminal device does not receive the first identifier, the terminal device sends a first message to the network device, where the first message indicates the network device to send the first identifier. The first message carries at least one of one or more first identifiers supported by the terminal device, current scenario information of the terminal device, and request information for the terminal device to request the network device to send the first identifier.

Optionally, based on different distinguishing granularities of the scenario identifiers, the current scenario identifier may be described as a plurality of scenario identifiers, and the first identifier is a general term of these scenario identifiers.

Optionally, the terminal device sends the first identifier to the network device by using the first message, to obtain the first AI model.

Optionally, the terminal device reports, to the network device based on the first message, all scenarios supported by the terminal device, namely, scenarios that correspond to all first AI models and that are supported by the terminal device. The network device further determines the first identifier of the terminal device based on the scenario information reported by the terminal device and scenario information of the network device.

Optionally, after receiving a terminal device capability query information from the network device, the terminal device sends the first message to the network device.

Optionally, the terminal device sends the current scenario information by using the first message. The current scenario information may be current scenario information or scenario identifier determined by the terminal device. The network device further determines the first identifier of the terminal device based on the scenario information reported by the terminal device and the scenario information of the network device.

In an implementation, when receiving the first identifier, the terminal device sends a second message to the network device, where the second message indicates the network device to send a second identifier. The second message carries at least one of one or more first identifiers supported by the terminal device, current scenario information of the terminal device, and request information for the terminal device to request the network device to send the second identifier. The second identifier is different from the first identifier.

Optionally, after the network device sends the first identifier of the current network device to the terminal device, the terminal device cannot obtain the corresponding AI model, and the terminal device may send, to the network device by using the second message, the first identifier supported by the terminal device.

Alternatively, the terminal device considers that a scenario corresponding to the first identifier is inconsistent with the current scenario in which the terminal device is located, and sends a request message to the network device, to request the network device to send a second identifier. Optionally, the second identifier is different from the first identifier.

Optionally, the terminal device may obtain current scenario information, and report the scenario information to the network device by using the second message. The network device further determines the second identifier of the terminal device based on the scenario information reported by the terminal device and the scenario information of the network device. The network device sends the second identifier to the terminal device. Optionally, the second identifier is different from the first identifier.

Optionally, the terminal device may alternatively report, to the network device based on the second message, all scenarios supported by the terminal device, namely, scenarios that correspond to all first AI models and that are supported by the terminal device. The network device further determines the second identifier of the terminal device based on the scenario information reported by the terminal device and the scenario information of the network device. The network device sends the second identifier to the terminal device. Optionally, the second identifier is different from the first identifier. Specific content reported by the terminal device is not limited in this embodiment of this application.

Optionally, after receiving a terminal device capability query information from the network device, the terminal device sends the second message to the network device.

Optionally, if the terminal device reports a plurality of scenarios, the network device determines one first identifier based on the plurality of scenarios reported by the terminal device and a plurality of scenarios supported by the network device. For example, 80% indoor scenarios and 20% outdoor scenarios are within coverage of the network device. In this case, the network device sends an indoor scenario identifier by using the broadcast message. In this case, the terminal device receives the indoor scenario identifier from the network device. However, the terminal device considers, based on surrounding scenario information, that a surrounding scenario in which the terminal device is located is the outdoor scenario. When considering that the first identifier sent by the network device is inconsistent with the current scenario in which the terminal device is located, the terminal device may report the surrounding scenario information of the terminal device, to indicate the network device to send an outdoor scenario identifier.

For example, the terminal device may report the scenario information of the terminal device by using the first message. For example, the terminal device is located in the outdoor scenario.

For example, the terminal device may report, by using the first message, the scenario information supported by the terminal device, for example, the outdoor scenario or an urban macrocell scenario supported by the terminal device. In this case, a scenario in which the network device is located includes the indoor scenario and the outdoor scenario. Therefore, the network device indicates the outdoor scenario identifier to the terminal device.

Optionally, the first message is media access control control element (media access control control element, MAC CE) signaling.

Optionally, the first message is a UE capability reporting message.

Optionally, the terminal device may alternatively send the surrounding scenario information of the terminal device or the first message before the network device sends the first identifier.

Optionally, if considering that the surrounding scenario changes, the terminal device may alternatively send the surrounding scenario information of the terminal device or the first message to the network device.

Optionally, if considering that the first identifier sent by the network device is inconsistent with the current scenario in which the terminal device is located, the terminal device may collect training data in the current scenario, to train the first AI model, where the first AI model obtained through training corresponds to the first identifier sent by the network device.

Optionally, the second identifier corresponds to a second AI model.

In an implementation, when scenarios/a scenario in which the network device and/or the terminal device are/is located change/changes, the network device and/or the terminal device switch/switches the first AI model.

In this embodiment of this application, an example in which the scenario of the terminal device switches is used. The terminal device switches from coverage of a network device 1 to coverage of a network device 2. Then, the terminal device switches the first AI model, and determines that the training dataset to which the collected training data belongs changes.

In an embodiment, the network device 2 directly indicates, to the terminal device, a first identifier corresponding to the network device 2. The terminal device uses, based on the first identifier corresponding to the network device 2, a corresponding first AI model, or determines that training data collected in a cell in which the network device 2 is located is classified into a training dataset for training the first AI model.

Optionally, the network device 2 may indicate the terminal device by using a scenario mark identifier. In this case, the terminal device trains or uses the corresponding first AI model based on the first identifier corresponding to the network device 2. For example, a scenario mark identifier of the network device 1 is 1, and the scenario mark identifier of the network device 2 is 2. The terminal device trains or uses, based on the preset list, a second AI model corresponding to the scenario mark identifier 2, or determines that the training data collected in the cell in which the network device 2 is located is classified into the training dataset corresponding to the scenario mark identifier 2.

Optionally, the network device 2 may indicate the terminal device by using the scenario type identifier, namely, the first identifier of the network device 2. The terminal device trains or uses the corresponding first AI model based on the first identifier corresponding to the network device 2. For example, when the scenario type identifier of the network device 1 is an indoor scenario identifier, and the scenario type identifier of the network device 2 is an outdoor scenario identifier, the terminal device learns, based on a broadcast message or a dedicated signaling message sent by the network device 2, that the scenario type identifier of the network device 2 is the outdoor scenario identifier, and the terminal device uses a first AI model corresponding to the outdoor scenario identifier, or classifies training data collected in a cell in which the network device 2 is located into a training dataset corresponding to the outdoor scenario.

Optionally, when the scenario type identifier of the network device 1 is an indoor scenario identifier, and the scenario type identifier of the network device 2 is an indoor office scenario identifier, the terminal device learns, based on a broadcast message or a dedicated signaling message sent by the network device 2, that the scenario type identifier of the network device 2 is the indoor office scenario identifier, and the terminal device may train or use a first AI model corresponding to the indoor scenario identifier, or may train or use a first AI model corresponding to the indoor office scenario identifier.

In an embodiment, the network device sends scenario indication information, and the terminal device trains or uses the first AI model based on the scenario indication information.

Optionally, the scenario indication information may be an adjacent cell list.

Optionally, an example in which the network device is a cell is used. When being located in a cell 1, the terminal device may receive a first identifier of an adjacent cell 2. If the first identifier of the cell 2 is the same as a first identifier of the cell 1, when the terminal device moves to the cell 2 adjacent to the cell 1, the terminal device does not need to switch a first AI model. In other words, the terminal device may form a common training dataset by using training data collected in the cell 2 and training data collected in the cell 1. If the first identifier of the cell 2 is different from a first identifier of the cell 1, when the terminal device moves to the cell 2 adjacent to the cell 1, the terminal device switches a first AI model based on the first identifier of the cell 2. In other words, the terminal device may classify training data collected in the cell 2 and training data collected in the cell 1 into different training datasets.

In an embodiment, when the scenario in which the terminal device is located changes, the terminal device reports new scenario information to the network device, and the network device indicates the second identifier based on the scenario information sent by the terminal device.

In an embodiment, when the scenario in which the terminal device is located changes, the terminal device does not change the first AI model, or the terminal device may classify training data collected in a new scenario into the same training dataset. For example, 80% indoor factory scenarios and 20% indoor office scenarios are within coverage of the network device. In this case, the network device sends an indoor factory scenario identifier by using the broadcast message. In this case, the terminal device receives the indoor factory scenario identifier from the network device. In this case, the terminal device may select an indoor factory first AI model corresponding to the indoor factory scenario identifier, or may select an indoor first AI model corresponding to the indoor scenario identifier. If the terminal device uses the indoor first AI model corresponding to the indoor scenario identifier, when the terminal device moves from the indoor factory scenario to the indoor office scenario, the indoor office scenario may also correspond to the indoor first AI model, and the terminal device may not switch the first AI model. Alternatively, the terminal device may classify training data collected in the indoor office scenario into a training dataset corresponding to the indoor scenario.

In an embodiment, when sending the first identifier of the network device by using the broadcast message, the network device may determine, by pre-classifying random access preamble sequences, whether the terminal device supports the first identifier broadcast by the network device, and further determine whether to activate a subsequent AI air interface application.

Optionally, 64 random access preamble sequences may be classified into two groups. It is specified that the random access preamble sequences 0 to 32 are a group A, indicating that the terminal device supports the first identifier broadcast by the network device, that is, the terminal device has the first AI model corresponding to the first identifier. Random access preamble sequences 32 to 64 are a group B, which indicates that the terminal device does not support the first identifier broadcast by the network device, that is, the terminal device does not have the first AI model corresponding to the first identifier.

Optionally, the random access preamble sequences may alternatively be classified in another form. For example, the access preamble sequences 32 to 48 indicate that the terminal device does not support the first identifier broadcast by the network device, but supports an urban microcell scenario type. This is not limited in this embodiment of this application.

In Embodiment 5, the terminal device reports the scenario information supported by the terminal device, and the network device determines the scenario that can be indicated.

The foregoing embodiments mainly describe a case in which the network device actively sends the first identifier to the terminal device. In Embodiment 5 of this application, the terminal device may further request the network device to send the first identifier, and reports the scenario supported by the terminal device.

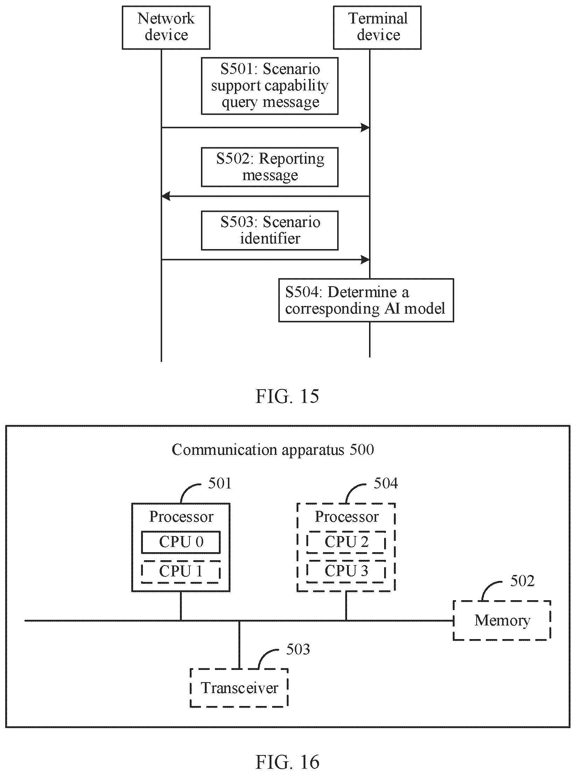

FIG. 15 is a flowchart of reporting scenario information by a terminal device, including steps S501 to S504.

S501: The terminal device receives a scenario support capability query message from a network device.

Optionally, before receiving the capability query message, the terminal device requests the network device to send a first identifier.

S502: The terminal device sends a reporting message based on the scenario support capability query message, to report a scenario type supported by the terminal device.

Optionally, the reporting message may include a capability of supporting various scenarios by the terminal device. For example, a capability of supporting a scenario type by the terminal device. If a scenario type identifier has been defined, the terminal device may report some scenario types in scenario type identifiers supported by the terminal device, to indicate a capability of supporting the scenario types.

Optionally, the terminal device may further request the network device to send specific scenario information. For example, the terminal may send a request for the specific scenario information by using a MAC CE.

Optionally, the MAC CE may further include the scenario type supported by the terminal device.

S503: The network device sends a broadcast message or dedicated signaling to the terminal device, where the broadcast message or the dedicated signaling carries the first identifier.

S504: The terminal device determines a corresponding second AI model based on the first identifier sent by the network device.

Optionally, if the terminal device does not support the first identifier sent by the network device, step S502 may be performed again, or the first AI model is trained by using the scenario information of the terminal device.

In the foregoing embodiment 5, in a manner in which the terminal device reports the scenario supported by the terminal device, a case in which the network device does not send the first identifier or the terminal device does not support the sent first identifier may be processed. The network device may further determine, based on a scenario support status reported by the terminal device, the first identifier or a second identifier that can be used by the terminal device.

In this application, unless otherwise specified, for same or similar parts in embodiments, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in different embodiments and the implementations/methods/implementation methods in embodiments may be combined to form a new embodiment, implementation, method, or implementation method based on an internal logical relationship of the technical features. The following implementations of this application are not intended to limit the protection scope of this application.

The foregoing describes, with reference to FIG. 1 to FIG. 15, in detail the method for determining an AI model provided in embodiments of this application. A communication apparatus provided in an embodiment of this application is described in detail below with reference to FIG. 16.

FIG. 16 is a diagram of a structure of a communication apparatus that may be configured to perform a method for determining an AI model according to an embodiment of this application. The communication apparatus 500 may be a network device or a terminal device, may be a chip in the network device or the terminal device, or may be another component having a corresponding function. As shown in FIG. 16, the communication apparatus 500 may include a processor 501. Optionally, the communication apparatus 500 may further include one or more of a memory 502 and a transceiver 503. The processor 501 and the one or more of the memory 502 and the transceiver 503 may be coupled, for example, may be connected through a communication bus, or the processor 501 may be independently used.

The following specifically describes components of the communication apparatus 500 with reference to FIG. 16. The processor 501 is a control center of the communication apparatus 500, and may be one processor, or may be a general term of a plurality of processing elements. For example, the processor 501 is one or more central processing units (central processing units, CPUs), or may be an application-specific integrated circuit (application-specific integrated circuit, ASIC), or is configured as one or more integrated circuits implementing embodiments of this application, for example, one or more microprocessors (digital signal processors, DSPs) or one or more field programmable gate arrays (field programmable gate arrays, FPGAs).

The processor 501 may run or execute a software program stored in the memory 502, and invoke data stored in the memory 502, to perform various functions of the communication apparatus 500.

During specific implementation, in an embodiment, the processor 501 may include one or more CPUs, such as a CPU 0 and a CPU 1 shown in FIG. 16.

During specific implementation, in an embodiment, the communication apparatus 500 may alternatively include a plurality of processors, such as the processor 501 and a processor 504 shown in FIG. 16. Each of these processors may be a single-core processor (single-CPU) or may be a multi-core processor (multi-CPU). The processor herein may be one or more communication devices, circuits, and/or processing cores configured to process data (for example, computer program instructions).

Optionally, the memory 502 may be a read-only memory (read-only memory, ROM) or another type of static storage communication device that can store static information and instructions, or a random access memory (random access memory, RAM) or another type of dynamic storage communication device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage communication device, or any other medium that can be configured to carry or store expected program code in a form of instructions or a data structure and that can be accessed by a computer, but is not limited thereto. The memory 502 may be integrated with the processor 501, or may exist independently, and is coupled to the processor 501 through an input/output port (not shown in FIG. 16) of the communication apparatus 500. This is not specifically limited in this embodiment of this application.

For example, the input port may be configured to implement a receiving function performed by the network device or the terminal device in any one of the foregoing method embodiments, and the output port may be configured to implement a sending function performed by the network device or the terminal device in any one of the foregoing method embodiments.

The memory 502 may be configured to store a software program for performing the solutions of this application, and the processor 501 controls execution of the software program. For a specific implementation, refer to the foregoing method embodiments. Details are not described herein again.

Optionally, the transceiver 503 is configured for communication with another communication apparatus. In addition, the transceiver 503 may include a receiver and a transmitter (not separately shown in FIG. 16). The receiver is configured to implement the receiving function, and the transmitter is configured to implement the sending function. The transceiver 503 may be integrated with the processor 501, or may exist independently, and is coupled to the processor 501 through the input/output port (not shown in FIG. 16) of the communication apparatus 500. This is not specifically limited in this embodiment of this application.

The structure of the communication apparatus 500 shown in FIG. 16 does not constitute a limitation on the communication apparatus. An actual communication apparatus may include more or fewer components than those shown in the figure, combine some components, or have different component arrangement.

Actions of the network device in FIG. 1 to FIG. 15 may be performed by the processor 501 in the communication apparatus 500 shown in FIG. 16 by invoking application program code stored in the memory 502, to indicate the network device to perform the actions.

Actions of the terminal device in FIG. 2 to FIG. 15 may be performed by the processor 501 in the communication apparatus 500 shown in FIG. 16 by invoking the application program code stored in the memory 502, to indicate the terminal device to perform the actions.

When the communication apparatus is the network device, the communication apparatus 500 may perform any one or more implementations of the network device in the foregoing method embodiments. When the communication apparatus is the terminal device, the communication apparatus 500 may perform any one or more implementations of the terminal device in the foregoing method embodiments.

All related content of each step in the foregoing embodiments may be cited in function descriptions of a corresponding functional module, and details are not described herein again.

An embodiment of this application provides a communication system. The communication system includes a terminal device and a network device.

The terminal device is configured to perform actions of the terminal device in the foregoing method embodiments. For a specific execution method and process, refer to the foregoing method embodiments. Details are not described herein again.

The network device is configured to perform actions of the network device in the foregoing method embodiments. For a specific execution method and process, refer to the foregoing method embodiments. Details are not described herein again.

An embodiment of this application provides a chip system. The chip system includes a logic circuit and an input/output port. The logic circuit may be configured to implement a processing function in the methods provided in embodiments of this application, and the input/output port may be configured to implement receiving and sending functions in the methods provided in embodiments of this application.

For example, the input port may be configured to implement the receiving function in the methods provided in embodiments of this application, and the output port may be configured to implement the sending function in the methods provided in embodiments of this application.

For example, the processor in the communication apparatus 500 may be configured to perform, for example, but not limited to, baseband-related processing, and the transceiver in the communication apparatus 500 may be configured to perform, for example, but not limited to, radio frequency receiving and sending. The foregoing devices may be separately disposed on chips that are independent of each other, or at least some or all of the devices may be disposed on a same chip. For example, the processor may be further classified into an analog baseband processor and a digital baseband processor. The analog baseband processor and the transceiver may be integrated on a same chip, and the digital baseband processor may be disposed on an independent chip. With continuous development of integrated circuit technologies, more and more devices may be integrated on a same chip. For example, the digital baseband processor may be integrated on a same chip with a plurality of application processors (for example, but not limited to a graphics processor and a multimedia processor). The chip may be referred to as a system-on-chip (system-on-chip). Whether the devices are separately disposed on different chips or integrated and disposed on one or more chips usually depends on a specific requirement of a product design. Specific implementation forms of the devices are not limited in embodiments of the present invention.

**In** a design, the chip system further includes a memory, and the memory is configured to store program instructions and data for implementing functions in the methods provided in embodiments of this application.

The chip system may include a chip, or may include the chip and another discrete device.

An embodiment of this application provides a computer-readable storage medium. The computer-readable storage medium stores a computer program or instructions. When the computer program or the instructions are run on a computer, the methods provided in embodiments of this application are performed.

An embodiment of this application provides a computer program product. The computer program product includes a computer program or instructions. When the computer program or the instructions are run on a computer, the methods provided in embodiments of this application are performed.

It should be understood that, the processor in embodiments of this application may be a central processing unit (central processing unit, CPU). The processor may be further another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should be further understood that the memory in this embodiment of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of random access memories (random access memories, RAMs) are available, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" refers to one or more, and "a plurality of" refers to two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

If no conflict is caused, any content in any two or more embodiments of this application may be freely combined, and a combined technical solution also falls within the scope of this application.

It may be clearly understood by a person skilled in the art that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. Some or all of the units may be selected based on an actual requirement to achieve the objective of the solutions of the embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining an artificial intelligence AI model, wherein the method comprises:
obtaining, by a terminal device, a first identifier, wherein the first identifier indicates a first scenario; and
obtaining, by the terminal device, a first AI model, wherein the first AI model corresponds to the first scenario.

2. The method for determining an AI model according to claim 1, wherein the obtaining, by a terminal device, a first identifier comprises:
receiving, by the terminal device, the first identifier from a network device; or
determining, by the terminal device, the first identifier based on the first scenario.

3. The method for determining an AI model according to claim 1 or 2, wherein the obtaining, by the terminal device, a first AI model comprises:
obtaining, by the terminal device, the first AI model based on the first identifier and training data;
receiving, by the terminal device, the first AI model from a network device; or
obtaining, by the terminal device, the first AI model from locally stored AI models.

4. The method for determining an AI model according to claim 3, wherein the obtaining, by the terminal device, the first AI model based on the first identifier and training data comprises:
determining, by the terminal device, the training data of the first AI model based on the first identifier, wherein the training data corresponds to the first scenario; and
obtaining, by the terminal device, the first AI model through training based on the training data.

5. The method for determining an AI model according to claim 3 or 4, wherein after the obtaining, by the terminal device, the first AI model based on the first identifier and training data, the method further comprises:
generating, by the terminal device, a correspondence between the first identifier and the first AI model.

6. The method for determining an AI model according to any one of claims 1 to 5, wherein a same first identifier corresponds to a same first AI model.

7. The method for determining an AI model according to any one of claims 1 to 6, wherein there are a plurality of first identifiers; and different first identifiers correspond to a same network configuration parameter, and the network configuration parameter comprises at least an antenna port configuration parameter or a beam configuration parameter.

8. The method for determining an AI model according to any one of claims 1 to 7, wherein the first identifier comprises at least one of a scenario type identifier, a first PMI identifier, or a scenario mark identifier.

9. The method for determining an AI model according to any one of claims 1 to 8, wherein the first identifier indicates a first network information set, and the first network information set comprises at least one of a cell identifier, a public land mobile network PLMN identifier, a tracking area code TAC, an access network area identifier RAN ID, a cell frequency, and a cell band that are of the first cell; and
the first cell is an adjacent cell of a second cell, and the second cell is a cell in which the terminal device is located.

10. The method for determining an AI model according to any one of claims 1 to 9, wherein when the terminal device does not receive the first identifier, the method further comprises:
sending, by the terminal device, a first message to the network device, wherein the first message indicates the network device to send the first identifier.

11. The method for determining an AI model according to claim 10, wherein the first message carries at least one of one or more first identifiers supported by the terminal device, scenario information of the first scenario of the terminal device, and request information for the terminal device to request the network device to send the first identifier.

12. The method for determining an AI model according to any one of claims 1 to 11, wherein the method further comprises:
receiving, by the terminal device, configuration information of a first random access resource and/or configuration information of a second random access resource from the network device; and
when the terminal device obtains the first AI model corresponding to the first identifier, initiating, by the terminal device, random access based on the configuration information of the first random access resource by using the first random access resource; or
when the terminal device does not obtain the first AI model corresponding to the first identifier, initiating, by the terminal device, random access based on the configuration information of the second random access resource by using the second random access resource.

13. A method for determining an artificial intelligence AI model, wherein the method comprises:
determining, by a first network device, a first identifier; and
sending, by the first network device, the first identifier to a terminal device, wherein the first identifier indicates a first scenario.

14. The method for determining an AI model according to claim 13, wherein the method further comprises:
receiving, by the first network device, a first message from the terminal device; and
sending, by the first network device, the first identifier to the terminal device based on the first message.

15. The method for determining an AI model according to claim 13 or 14, wherein the method further comprises:
sending, by the first network device to a second network device, one or more first identifiers supported by the terminal device, wherein the first network device is a network device accessed by the terminal device before switching, and the second network device is a network device accessed by the terminal device after the switching.

16. A communication apparatus, wherein the communication apparatus comprises a processor, and the processor is configured to perform the method according to any one of claims 1 to 15.

17. A computer-readable storage medium, wherein the computer-readable storage medium stores a computer program or instructions, and when the computer program or the instructions are run on a computer, the method according to any one of claims 1 to 15 is performed.

18. A computer program product, wherein the computer program product comprises a computer program or instructions, and when the computer program or the instructions are run on a computer, the method according to any one of claims 1 to 15 is performed.
